# EUROPEAN PATENT SPECIFICATION

(11) **EP 3 336 769 B1**
(45) Date of publication and mention of the grant of the patent: **21.06.2023**
(21) Application number: 17203175.9
(22) Date of filing: 22.11.2017
(51) Int. Cl.: G06K 15/00, G06K 15/02

(54) **PRINTER, DIGITAL CAMERA WITH PRINTER, AND INFORMATION DISPLAY METHOD OF PRINTER**
DRUCKER, DIGITALKAMERA MIT EINEM DRUCKER UND INFORMATIONSANZEIGEVERFAHREN EINES DRUCKERS
IMPRIMANTE, APPAREIL PHOTO NUMÉRIQUE ÉQUIPÉ D'UNE IMPRIMANTE ET PROCÉDÉ D'AFFICHAGE D'INFORMATIONS D'IMPRIMANTE

(30) Priority: 15.12.2016 JP 2016243285
(43) Date of publication of application: 20.06.2018
(73) Proprietor: FUJIFILM Corporation, Tokyo 106-8620 (JP)
(72) Inventor: NISHIURA, Yoshikuni, Minato-ku, Tokyo 107-0052 (JP); FUJIMOTO, Shinichi, Minato-ku, Tokyo 107-0052 (JP); SATO, Tsuneo, Minato-ku, Tokyo 107-0052 (JP)
(74) Representative: Jeffrey, Philip Michael

(56) References cited:
- JP-A- 2001 205 902
- US-A1- 2002 036 695
- US-A1- 2005 007 606
- US-A1- 2006 012 832
- US-B1- 6 952 272

## Description

### BACKGROUND OF THE INVENTION

### 1. Field of the Invention

The present invention relates to a printer, a digital camera with a printer, and an information display method of a printer.

### 2. Description of the Related Art

A digital camera which includes a printer built in a camera body and is capable of immediately printing a captured image has been known as a digital camera with a printer. For example, JP2001-28701A and WO99/53374A describe a digital camera that prints a captured image on an instant film.

In general, a display unit such as a liquid crystal monitor is provided at the digital camera. Thus, in the digital camera that includes a built printer, an image to be printed is displayed on the display unit, and it is possible to check the displayed image. JP2006-27017A suggests that an orientation of an image to be displayed on the display unit and an orientation of an image on a medium to be ejected from an ejection port match each other in order to check the printed image. JP2001-352472A suggests that an image to be printed and a print progress state are displayed on a display unit in order to recognize the print progress state. Similarly, JP2002-94910A suggests that an image to be printed is gradually displayed on a display unit according to a print progress state in order to recognize the print progress state.

JP2001-205902A suggests that a printing state is displayed as an image on a display screen in a printer having the display screen and an image being displayed on the display screen is moved in synchronization with paper ejection, and is removed from a screen in a case where paper is ejected.

US 2002/036695 discloses a digital camera and printer wherein, when a printing mode is changed to a photography mode while printing is being performed, the image being taken is displayed on a display unit while a printing progress situation is superposed on an area of the display unit. JP 2001 205902 discloses a printer equipped with a display screen for letting a user know that the print process is progressing in the printer. US 6,952,272 discloses an electronic camera with an integrated printer and an LCD screen the same size as a printing area of an instant photo film sheet. US 2005/007606 discloses a printing apparatus, display method thereof, printing system, display method thereof, program, and memory medium

### SUMMARY OF THE INVENTION

However, the digital camera with a printer of the related art described in JP2001-28701A, WO99/53374A, JP2006-27017A, JP2001-352472A, JP2002-94910A, and JP2001-205902A has a disadvantage that it is difficult to recognize an ejection direction of a medium.

The printer described in JP2001-205902Ahas a disadvantage that the image printed on the screen is not able to be recognized since the printed image is removed from the screen.

The present invention has been made in view of such circumstances, and it is an object of the present invention to provide a printer, a digital camera with a printer, and an information display method of a printer, with good operability.

Means for solving the problems is as follows.

There is provided a printer as claimed in claim 1.

According to an embodiment, the printing target image is displayed on the display unit. In a case where the image displayed on the display unit is printed, the print instruction unit transmits the print instruction. In a case where the print instruction is received, the image being displayed is printed on the medium, and is ejected. In a case where the print instruction is received, the imaging image to be printed is displayed so as to be overlapped on the image being displayed on the display unit. The displayed imaging image is moved along the ejection direction of the medium, and is removed from the screen. Accordingly, it is possible to recognize the ejection direction of the medium from the display of the display unit at a first glance. The imaging image is displayed so as to be overlapped with the image being displayed on the display unit. The image to be displayed so as to be overlapped under the imaging image is the image for which the print instruction is received, that is, the printed image, and appears on the screen by moving the imaging image. Accordingly, it is possible to recognize the printed image even after the imaging image is removed. Particularly, in a case where the instant film is used as the medium to be printed, since it takes until development is completed, it is possible to immediately check the printed image on the screen. The imaging image to be printed is the image representing print imagination. Accordingly, the imaging image to be printed may be an image being displayed as it is (as it is called an image of a print without an edge), or may be an image acquired by adding a frame to an image being displayed (as it is called an image of a print with a frame).

The display control unit changes brightness and/or saturation of the image being displayed on the display unit in a case where the instruction to print the image is received from the print instruction unit.

According to an embodiment, in a case where the print instruction is received from the print instruction unit, the brightness and/or saturation of the image being displayed on the display unit, that is, the image to be displayed so as to be overlapped under the imaging image is changed. Accordingly, it is possible to easily distinguish between the imaging image and the image to be displayed under the imaging image, and it is possible to improve visibility. Particularly, in a case where the imaging image is the same image as that image to be displayed under the imaging image, it is possible to provide favorable visibility.

Further, the imaging image is an image acquired by adding a frame to an image to be printed.

According to an embodiment, the imaging image is the image acquired by adding the frame to the image to be printed. Accordingly, it is possible to deeply impress the user with the image to be printed, and it is possible to more favorably realize intuitive operability.

Further, the display control unit causes the imaging image to appear by gradually contracting the image being displayed on the display unit and causes the frame to gradually appear around the image being displayed on the display unit in a case where the instruction to print the image is received from the print instruction unit.

According to an embodiment, in a case where the print instruction is received from the print instruction, the image being displayed on the display unit gradually contracts, and is switched to the imaging image to be printed. That is, the image being displayed on the display unit gradually contracts, and thus, the frame around the image being displayed gradually appears. Thereafter, the image being displayed is switched to the imaging image to be printed. Accordingly, it is possible to smoothly display the imaging image with the frame.

Further, the display control unit moves the imaging image in synchronization with an ejection speed of the medium, and removes the imaging image from the screen.

According to an embodiment, in a case where the image is moved and is removed from the screen, the image is moved in synchronization with the ejection speed of the medium. Accordingly, it is possible to recognize the ejection state of the medium from the display of the display unit at a first glance.

Further, the display control unit displays the imaging image such that an orientation of the imaging image matches an orientation of an image to be printed on the medium.

According to an embodiment, the orientation of the imaging image and the orientation of the image to be printed on the medium match each other. Accordingly, it is possible to easily recognize the orientation of the image to be printed on the medium.

The printer further comprises: a confirmation unit that confirms the instruction to print the image from the print instruction unit; and a cancellation unit that cancels the instruction to print the image from the print instruction unit. The display control unit displays a dialog for inquiring about printing on the display unit in a case where the instruction to print the image is received from the print instruction unit.

According to an embodiment, in a case where the print instruction is received from the print instruction unit, the dialog for inquiring about the printing is displayed on the display unit. In the image is printed, the confirmation unit confirms the print instruction. In a case where the print is canceled, the cancellation unit cancels the print. Accordingly, it is possible to prevent an erroneous operation.

Further, the display control unit displays the dialog from an edge of the screen in a case where the instruction to print the image is received from the print instruction unit.

According to an embodiment, the dialog for inquiring about the printing is displayed from the edge of the screen. Accordingly, it is possible to display the dialog so as to draw the user's attention. It is preferable that the dialog is displayed from the edge of the screen existing in a position closest to the installation position of the print instruction unit.

Further, the print unit prints an image on an instant film.

According to an embodiment, the image is printed on the instant film. The instant film is used as the medium, and thus, it is possible to accelerate the printing process. The instant film means a self-developed treatment type a photographic film.

In addition, there is provided a digital camera with a printer, as claimed in claim 10.

According to an embodiment, the operation mode is set to the capturing mode, and thus, it is possible to capture the image. In a case where the instruction to capture the image is received from the capturing instruction unit, the image is captured by the image sensor, and the captured image is stored in the image storage unit. It is possible to print the image stored in the image storage unit by setting the operation mode to be the playback mode. In a case where the operation mode is set to the playback mode, the image stored in the image storage unit is displayed on the display unit. In a case where the print instruction for the image being displayed is received, the image is printed on the medium, and is ejected. In a case where the print instruction is received, the imaging image to be printed is displayed so as to be overlapped on the image being displayed on the display unit. The displayed imaging image is moved along the ejection direction of the medium, and is removed from the screen.

The digital camera with a printer further comprises: a capturing mode switching unit that switches between a first capturing mode and a second capturing mode, as the capturing mode. In a case where the capturing mode is set to the first capturing mode and imaging is performed, the print control unit causes the print unit to print the captured image, and in a case where the capturing mode is set to the second capturing mode and an image is captured, the display control unit displays, as the printing target image, the captured image on the display unit, and the print control unit causes the print unit to print the captured image, and the display control unit displays the imaging image to be printed such that the imaging image to be printed is overlapped on the image being displayed on the display unit, moves the imaging image along an ejection direction of the medium, and removes the imaging image from the screen in a case where an instruction to print the image being displayed on the display unit is received.

According to an embodiment, there are the first capturing mode and the second capturing mode, as the capturing mode. In a case where an image is captured in the first capturing mode, the captured image is automatically printed. In a case where an image is captured in the second capturing mode, the captured image is displayed on the display unit. The captured image is printed after the print instruction is received. In a case where the print instruction is received, the captured image is printed on the medium, and is ejected. In a case where the print instruction is received, the imaging image to be printed is displayed so as to be overlapped on the image being displayed on the display unit. The displayed imaging image is moved along the ejection direction of the medium, and is removed from the screen.

In addition, there is provided an information display method of a printer, as claimed in claim 12.

According to an embodiment, the printing target image is displayed on the display unit. In a case where the image displayed on the display unit is printed, the imaging image to be printed is displayed so as to be overlapped on the image being displayed on the display unit. The displayed imaging image is moved along the ejection direction of the medium, and is removed from the screen. Accordingly, it is possible to recognize the ejection direction of the medium from the display of the display unit at a first glance. The imaging image is displayed so as to be overlapped with the image being displayed on the display unit. The image to be displayed so as to be overlapped under the imaging image is the printed image, and appears on the screen by moving the imaging image. Accordingly, it is possible to recognize the printed image even after the imaging image is removed.

According to an embodiment, it is possible to easily recognize the ejection direction of the medium, and it is possible to check the printed image on the screen. Accordingly, it is possible to provide a printer and a digital camera with a printer, with good operability.

### BRIEF DESCRIPTION OF THE DRAWINGS

Fig. 1 is a front perspective view showing an embodiment of a digital camera with a printer.
Fig. 2 is a rear perspective view showing the embodiment of the digital camera with a printer.
Fig. 3 is a front view showing the embodiment of the digital camera with a printer.
Fig. 4 is a rear view showing the embodiment of the digital camera with a printer.
Fig. 5 is a diagram showing an internal mechanical configuration of the digital camera with a printer.
Fig. 6 is a front view of an instant film.
Fig. 7 is a rear view of the instant film.
Fig. 8 is a diagram showing an electric configuration of the digital camera with a printer.
Fig. 9 is a flowchart showing a process procedure in an auto mode.
Fig. 10 is a diagram showing an example of the screen display of a monitor on which live view is being displayed.
Fig. 11 is a diagram showing an example of the screen display of the monitor being previewed.
Fig. 12 is a diagram showing an ejection state of the instant film.
Figs. 13A to 13D are diagrams showing the transition of the screen display of the monitor in a case where a print animation process is performed.
Fig. 14 is a flowchart showing a process procedure in a manual mode.
Fig. 15 is a diagram showing an example of the screen display of the monitor on which the dialog is displayed.
Fig. 16 is a flowchart showing a process procedure in a playback mode.
Fig. 17 is a diagram showing an example of the screen display of the monitor in a case where the digital camera with a printer is set in the playback mode.
Fig. 18 is a diagram showing an example of the screen display of the monitor on which the dialog is displayed.
Figs. 19A to 19D are diagrams showing modification examples of the transition of the screen display of the monitor in a case where the print animation process is performed.
Figs. 20A to 20D are diagrams showing the transition of the screen display of the monitor in a case where an imaging image to be printed is displayed in the form of animation in a case where the imaging image to be printed appears.
Figs. 21A to 21D are diagrams showing examples of print animation in a case where an orientation of the image on the instant film and an orientation of the imaging image to be printed match each other and the imaging image to be printed is removed from a screen.
Figs. 22A to 22D are diagrams showing examples of the print animation in a case where the instant film is ejected from the bottom of a camera body.
Figs. 23A to 23C are diagrams showing examples of the print animation in a case where the instant film is ejected from the side of the camera body.
Figs. 24A to 24C are diagrams showing examples of the print animation in a case where the instant film is ejected from the side of the camera body.
Figs. 25A to 25C are diagrams showing examples of the print animation in a case where the image is removed after the orientation of the imaging image to be printed matches the orientation of the image to be printed on the instant film in the digital camera with a printer in which the instant film is ejected from the side of the camera body.

### DESCRIPTION OF THE PREFERRED EMBODIMENTS

Hereinafter, a preferred embodiment of the present invention will be described in detail with reference to the accompanying drawings.

### Digital Camera with Printer

### External Appearance Configuration

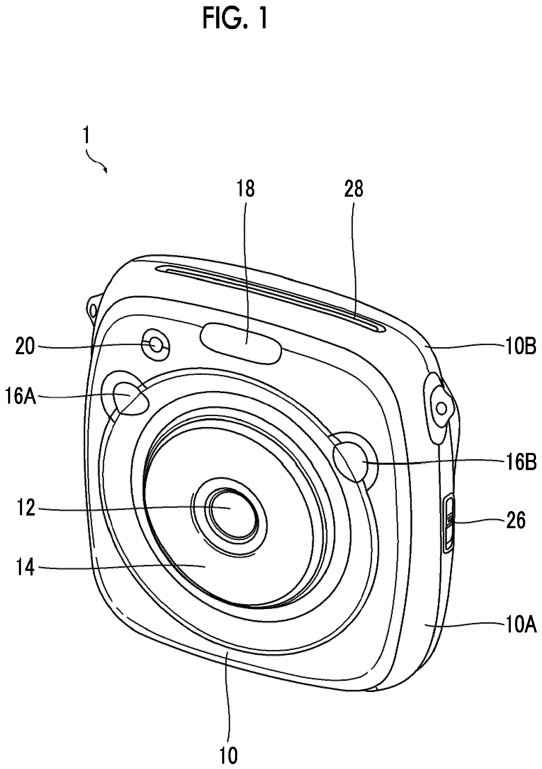

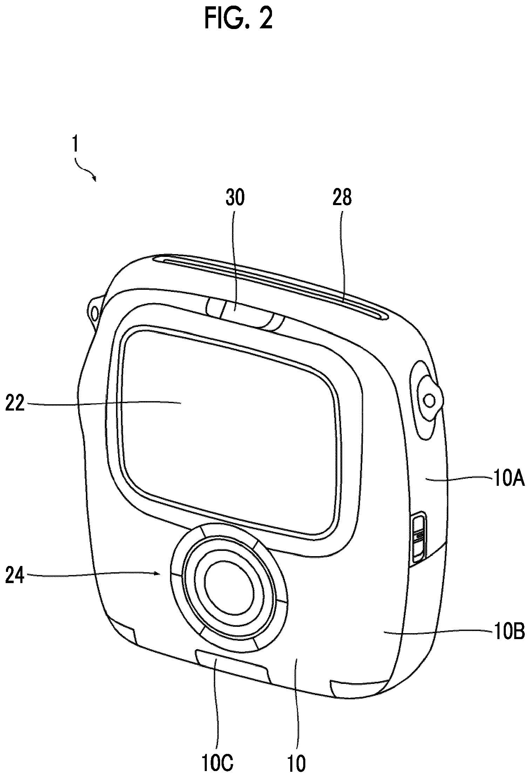

Figs. 1 to 4 are a front perspective view, a rear perspective view, a front view, and a rear view showing an embodiment of a digital camera with a printer, respectively.

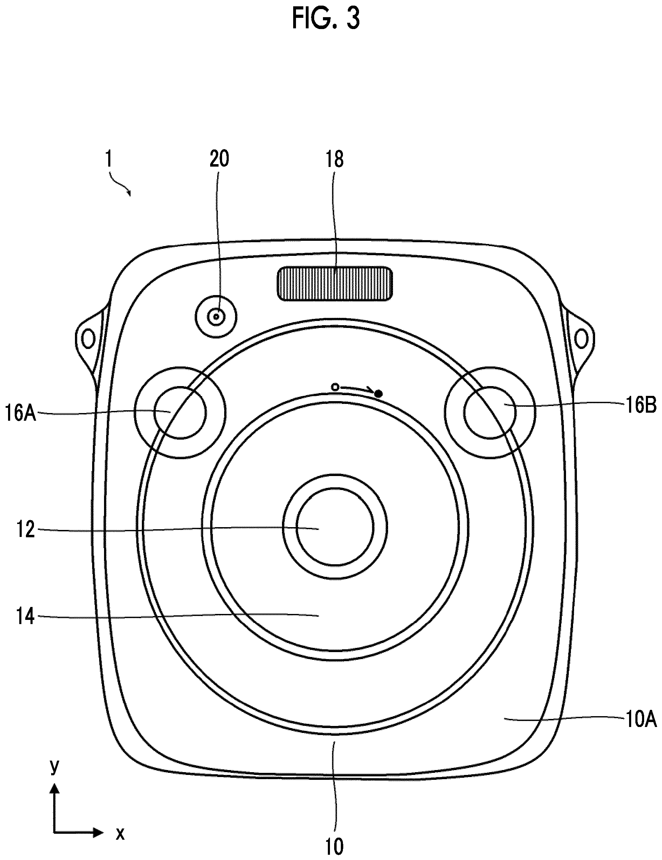

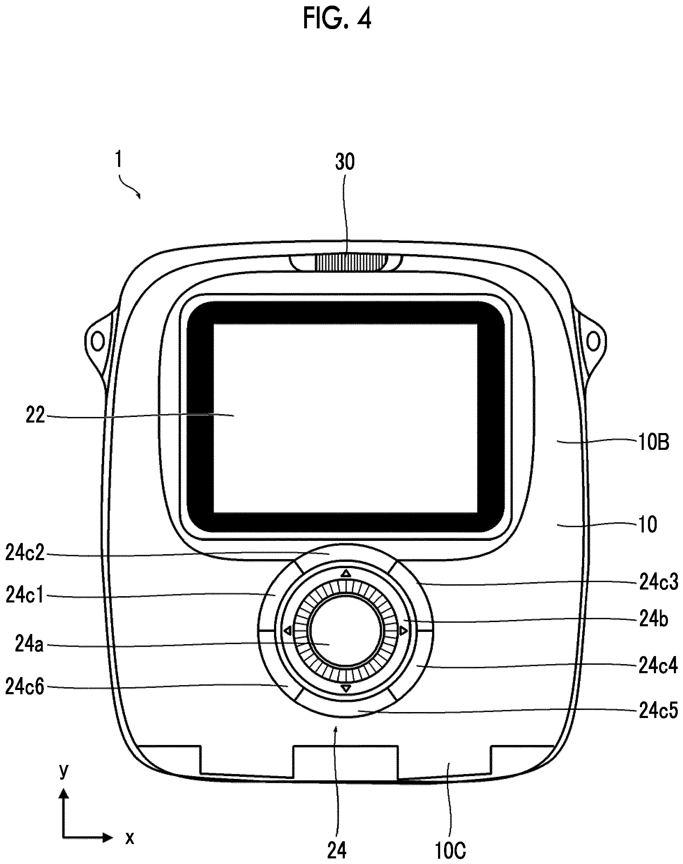

A digital camera with a printer 1 shown in Figs. 1 to 4 is a digital camera with a printer that uses an instant film as a medium for printing. In Figs. 3 and 4, it is assumed that a direction represented by an arrow x is a leftward and rightward direction and a direction represented by an arrow y is an upward and downward direction. The leftward and rightward direction is a synonym for a horizontal direction or a width direction. The upward and downward direction is a synonym for a height direction.

The digital camera with a printer 1 includes a portable camera body 10. The camera body 10 includes an imaging lens 12, a power ring 14, a first release button 16A, a second release button 16B, a flash 18, and an auxiliary light lamp 20 which are provided in the front. The camera body 10 includes a monitor 22 and a rear operation unit 24 which are provided at the rear. The camera body 10 includes a capturing mode switching lever 26 which is provided on the right side and a print ejection port 28 which is provided at the top.

### Camera Body

The camera body 10 has a rounded flat block shape as a whole. The camera body 10 has a bilaterally symmetrical shape as a whole so as to be gripped with either of the left and right hands.

The camera body 10 includes a main body 10A and a back cover 10B. The back cover 10B constitutes the rear of the camera body 10, and is provided so as to be opened and closed with respect to the main body 10A through a hinge 10C. A back cover locking mechanism that locks the back cover 10B is provided at the main body 10A. In a case where the back cover is closed, the back cover 10B is automatically locked by the back cover locking mechanism. The back cover is unlocked by a sliding type unlocking lever 30 provided at the back cover 10B. However, the unlocking lever is not able to be operated during the printing. That is, the unlocking lever is forcibly locked such that the back cover 10B is not opened during the printing.

### Imaging Lens

The imaging lens 12 is arranged in a substantially central position in the front of the camera body 10. The imaging lens 12 is a unifocal lens.

### Power Ring

The power ring 14 is an operation member that powers on and off the digital camera with a printer 1. The power ring 14 has a ring shape, and is arranged on the same axis as that of the imaging lens 12. The power ring 14 is rotated around the imaging lens 12, and powers on and off the digital camera with a printer 1. Since a movable range of the power ring 14 is restricted, the power of the digital camera with a printer 1 is powered on in a case where the power ring rotates up to one end of the movable range, and the power of the digital camera with a printer 1 is powered off in a case where the power ring rotates up to the other end of the movable range.

### First Release Button and Second Release Button

The first release button 16A and the second release button 16B are operation members for transmitting an instruction to capture an image, and are examples of a capturing instruction unit. The first release button 16A and the second release button 16B are provided in the front of the camera body 10, and are arranged so as to be bilaterally symmetric with respect to each other. The first release button 16A and the second release button 16B are so-called two-stage stroke type push buttons capable of being "half push" operated and "fully push" operated. The digital camera with a printer 1 performs capturing preparation by operating the half push of the first release button 16A or the second release button 16B, and performs actual capturing by operating the fully push of the first or second button. The actual capturing is capturing for recording an image.

### Flash

The flash 18 is provided in the front of the camera body 10, and is arranged substantially directly above the imaging lens 12. The flash 18 is a xenon tube.

### Auxiliary Light Lamp

The auxiliary light lamp 20 is a lamp that emits auxiliary light for autofocus (AF). The auxiliary light lamp 20 emits the light in a case where capturing is performed under a dark environment, and is used as the auxiliary light for AF. The auxiliary light lamp 20 is a light emitting diode (LED), and is provided in the front of the camera body 10.

### Monitor

The monitor 22 is an example of a display unit. The monitor 22 is a color liquid crystal display (LCD). The monitor 22 is provided at the rear of the camera body 10. The monitor 22 is a so-called wide monitor, and includes a horizontally long screen.

### Rear Operation Unit

The rear operation unit 24 includes a menu button 24a, a command dial 24b, and six function buttons 24c1 to 24c6. The menu button 24a, the command dial 24b, and the six function buttons 24c1 to 24c6 are arranged so as to be concentric, and constitute a circular operation unit as a whole. The rear operation unit 24 is provided at the rear of the camera body 10. Both the monitor 22 and the rear operation unit 24 are arranged in the center at the rear of the camera body 10 in the width direction, and are vertically arranged.

### Menu Button

The menu button 24a is a button for calling a menu screen on the monitor 22. The menu button 24a is a circular push button. The menu button 24a is arranged in the center of the rear operation unit 24. The menu button 24a is pushed, and thus, the menu screen is displayed on the monitor 22.

The menu button 24a also functions as an OK button. The OK button is a button for transmitting an instruction to input OK for an inquiry. As will be described below, in a case where a print instruction is received, the dialog for inquiring about the printing may be displayed on the monitor 22. In a case where the image is desired to be printed, the user inputs OK by pushing the menu button 24a, and confirms the print instruction. Accordingly, in the digital camera with a printer 1 of the present embodiment, the menu button 24a functions as a confirmation unit.

### Command Dial

The command dial 24b is a ring-shaped touch sensor, and is rotated by passing the finger across the surface thereof along the circle. The command dial 24b also functions as a cross key, and is able to be pushed in four upward, downward, leftward, and rightward directions.

The command dial 24b is arranged on the same axis as that of the menu button 24a, and is arranged in an outer circumference of the menu button 24a.

### Function Buttons

The six function buttons 24c1 to 24c6 are arranged in the same circumference, and constitute one circle as a whole. The buttons have the same shape, and have a shape in which the ring is equally split into six. Each button is a push button.

The first function button 24c1 functions as a vignetting button. The vignetting button is a button for calling a function of performing a vignetting process on an image. The vignetting process is a process of reducing the brightness at an edge part of the image.

The second function button 24c2 functions as an effect button. The effect button is a button for calling a function of performing an effect process on an image. The effect process is a process of giving a certain effect to the image, and corresponds to, for example, a process of changing the tone of the image or blurring the image.

The third function button 24c3 functions as a brightness button. The brightness button is a button for calling a function of changing the brightness of an image.

The fourth function button 24c4 functions as a print button. The print button is a button for transmitting an instruction to print an image being displayed on the monitor 22. The fourth function button 24c4 is an example of a print instruction unit.

The fifth function button 24c5 functions as a back button. The back button is a button for transmitting an instruction to return the image in an immediately previous state. Since the image is returned to be in the immediately previous state, the selected item or the instructed item is canceled. That is, the fifth function button 24c5 also functions as a cancel button. The fifth function button 24c5 is an example of a cancellation unit.

The sixth function button 24c6 functions as a playback button. The playback button is a button for transmitting an instruction to switch the digital camera with a printer to a playback mode. In a case where the sixth function button 24c6 is pushed in a state in which the operation mode is set to the capturing mode, the operation mode is switched to the playback mode.

The switching from the playback mode to the capturing mode is performed by the first release button 16A and the second release button 16B. That is, in a case where the first release button 16A or the second release button 16B is pushed in a state in which the operation mode is set to the playback mode, the operation mode is switched to the capturing mode. Accordingly, in the digital camera with a printer 1 of the present embodiment, the sixth function button 24c6, the first release button 16A, and the second release button 16B constitute an operation mode switching unit.

### Capturing Mode Switching Lever

The capturing mode switching lever 26 is an example of a capturing mode switching unit, and is an operation member for switching the capturing mode. The capturing mode switching lever 26 is a sliding type switch, and is provided on the right side of the camera body 10. The capturing mode switching lever 26 is operated to be slid, and the capturing mode is set to an "auto mode" which is a first capturing mode in a case where the capturing mode switching lever is set in an "auto position". The capturing mode is set to a "manual mode" which is a second capturing mode in a case where the capturing mode switching lever is set in a "manual position".

In a case where an image is captured in the auto mode, the printing process is automatically performed. Meanwhile, in a case where the image is captured in the manual mode, the captured image is displayed on the monitor 22, and the printing process is performed after the print instruction is waited. The details thereof will be described below.

### Print Ejection Port

The print ejection port 28 is an ejection port of the printed instant film. The print ejection port 28 is a slit through which the instant film is able to pass, and is provided in the center at the top of the camera body 10 in the width direction. An instant film 110 is ejected directly upwards from the print ejection port 28.

### Internal Mechanical Configuration

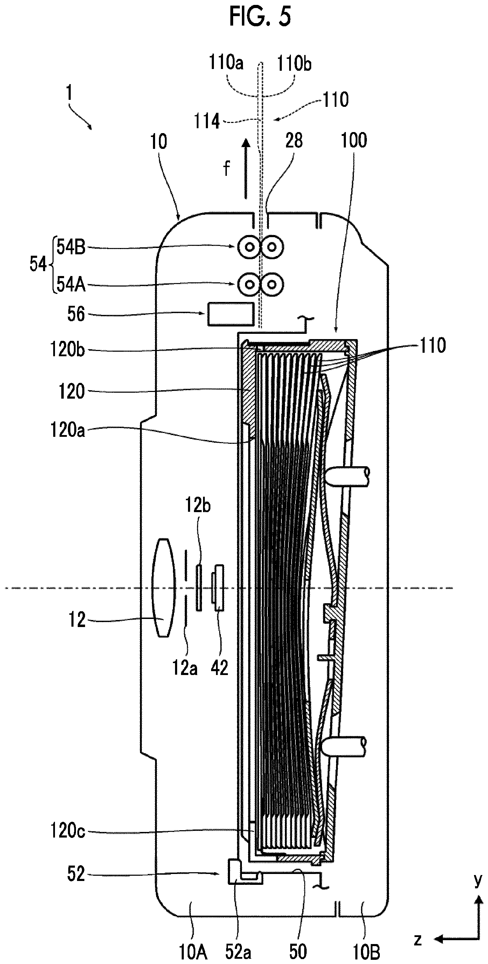

Fig. 5 is a diagram showing an internal mechanical configuration of the digital camera with a printer. Fig. 5 shows only the configuration of main units. It is assumed in Fig. 5 that a direction represented by an arrow z is a thickness direction.

As the configuration related to the digital camera, the imaging lens 12 and an image sensor 42 are provided within the digital camera with a printer 1. As the configuration related to the printer, an instant film pack 100, a film loading room 50, a film delivery mechanism 52, a film transport mechanism 54, and a print head 56 are provided.

### Configuration Related to Digital Camera

### Imaging Lens

The imaging lens 12 is constituted by a plurality of lenses including a focus lens. In Fig. 5, only one lens is shown for simplicity of illustration. A focal length of the imaging lens 12 is adjusted by moving the focus lens back and forth along an optical axis.

A stop 12a and a shutter 12b are provided in the imaging lens 12. The light amount of light passing through the imaging lens 12 is adjusted by the stop 12a. The light passing through the imaging lens 12 is shielded by the shutter 12b.

### Image Sensor

For example, the image sensor 42 is a two-dimensional solid image pickup element such as a charge coupled device (CCD) image sensor or a complementary metal oxide semiconductor (CMOS) image sensor. The image sensor 42 includes an image pickup area having an aspect ratio corresponding to an exposure area of the instant film to be used.

### Configuration Related to Printer

### Instant Film Pack

The instant film pack 100 has a structure in which a plurality of instant films 110 is accommodated in a case 120.

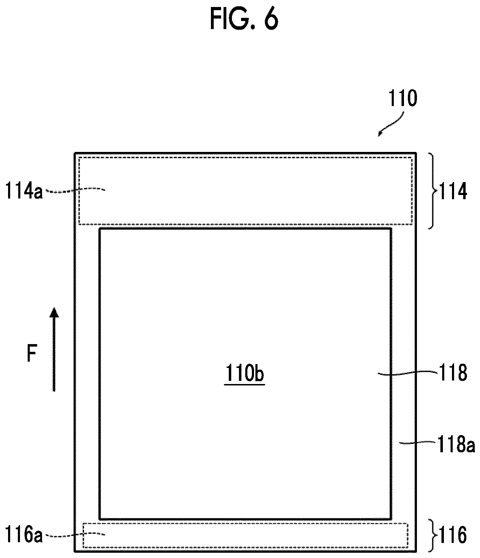

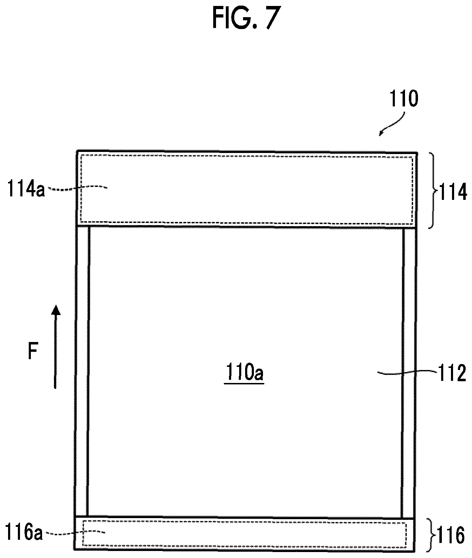

Fig. 6 is a front view of the instant film. Fig. 7 is a rear view of the instant film.

In Figs. 6 and 7, a direction represented by an arrow F is a utilization direction of the instant film 110. That is, the instant film 110 is sent toward the direction represented by the arrow F, and the instant film 110 is used. Accordingly, in a case where the instant film is loaded into the digital camera with a printer 1, the direction represented by the arrow F is an ejection direction of the instant film 110.

The instant film 110 has a rectangular card shape. The instant film 110 includes an exposure surface 110a which is a rear surface and an observation surface 110b which is a front surface. The exposure surface 110a is a surface on which an image is recorded through exposure, and the observation surface 110b is a surface through which the recorded image is observed.

As shown in Fig. 7, an exposure part 112, a pod part 114, and a trap part 116 are provided on the exposure surface 110a of the instant film 110.

The exposure part 112 is a part in which an image is recorded through exposure. The pod part 114 and the trap part 116 are arranged on front and rear sides with the exposure part 112 interposed therebetween. The instant film 110 of the present embodiment includes a square-shaped exposure part 112 of which an aspect ratio is 1:1.

The pod part 114 is arranged on the front side of the exposure part 112 in the utilization direction F. A development treatment liquid pod 114a that contains a development treatment liquid is provided within the pod part 114.

The trap part 116 is arranged on the rear side of the exposure part 112 in the utilization direction F. An absorbing material 116a is provided within the trap part 116.

As shown in Fig. 6, an observation part 118 is provided on the observation surface 110b of the instant film 110. The observation part 118 is a part in which the image is displayed. The image is displayed on the observation part 118 by performing a development treatment on the exposure part 112. The observation part 118 is arranged so as to correspond to the exposure part 112. A frame 118a is provided around the observation part 118. Accordingly, the image is displayed within the frame. An aspect ratio of the observation part 118 is 1:1 which is the same as that of the exposure part 112, and has a square shape.

The instant film 110 is observed in an orientation in which the trap part 116 is at the top and the pod part 114 is at the bottom. Accordingly, the image is printed in an orientation in which the trap part 116 is at the top and the pod part 114 is at the bottom.

The development treatment liquid of the pod part 114 spreads over the exposure part 112 after the exposure, and thus, the development treatment is performed on the instant film 110. The instant film 110 passes between roller pairs, and thus, the development treatment liquid of the pod part 114 is extruded from the pod part 114 and spreads over the exposure part 112. The development treatment liquid remaining after the spreading is trapped in the trap part 116.

The case 120 has a rectangular box shape. The case 120 includes an opening 120a for exposure which is provided in the front, and includes a slit-shaped ejection port 120b which is provided at the top. The instant films 110 are accommodated so as to overlap each other within the case in a state in which the exposure surface 110a faces the front of the case 120 and the pod part 114 faces the top of the case 120.

The case 120 includes a slit-shaped claw opening 120c in the bottom. A claw enters the claw opening 120c, and thus, the instant films 110 accommodated in the case 120 are sent toward the ejection port 120b one by one, and are ejected from the ejection port 120b.

Ten instant films 110 are accommodated in one instant film pack 100.

### Film Loading Room

The film loading room 50 is provided as a recess part capable of accommodating the instant film pack 100 in the main body 10A of the camera body 10. In a case where the back cover 10B of the camera body 10 is opened, the film loading room 50 is exposed, and the instant film pack 100 is able to be loaded.

### Film Delivery Mechanism

The film delivery mechanism 52 delivers the instant films 110 from the instant film pack 100 loaded into the film loading room 50 one by one. The film delivery mechanism 52 includes a claw 52a that moves back and forth along a delivery direction of the instant film 110. The instant films 110 within the case are extracted by the claw 52a one by one, and the instant film 110 is delivered from the instant film pack 100.

### Film Transport Mechanism

The film transport mechanism 54 transports the instant film 110 delivered from the instant film pack 100 by the film delivery mechanism 52 at a certain speed. The film transport mechanism 54 includes a transport roller pair 54A and a spreading roller pair 54B.

The transport roller pair 54A is rotated by being driven by a motor (not shown), and transports the instant film while clamping both sides of the instant film 110.

The spreading roller pair 54B is rotated by being driven by a motor (not shown), and transports the instant film 110 while clamping the entire instant film. The pod part 114 of the instant film 110 is pushed during the transporting, and the development treatment liquid spreads.

The print head 56 records an image on the instant film 110 delivered from the instant film pack 100. The print head 56 is a line-type exposure head. The print head 56 irradiates the exposure surface 110a of the instant film 110 transported by the film transport mechanism 54 with print light for every line, and records the image on the instant film 110 in one pass.

In the digital camera with a printer 1 of the present embodiment, the film delivery mechanism 52, the film transport mechanism 54, and the print head 56 constitute a print unit.

### Electric Configuration

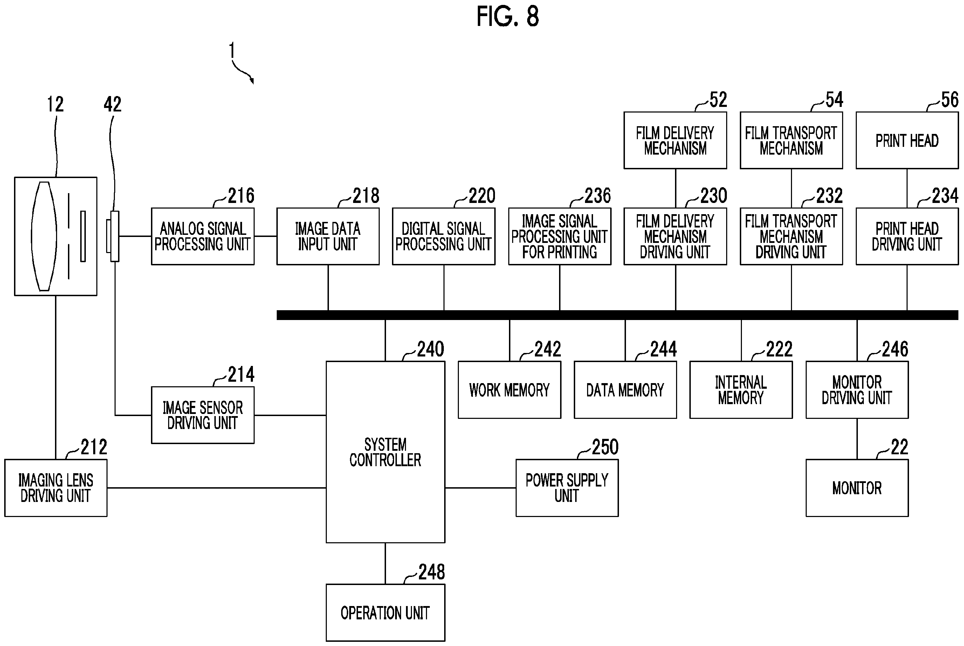

Fig. 8 is a diagram showing an electric configuration of the digital camera with a printer. Fig. 8 shows only the configuration of main units.

As the configuration related to the digital camera, the digital camera with a printer 1 includes the imaging lens 12, an imaging lens driving unit 212, the image sensor 42, an image sensor driving unit 214, an analog signal processing unit 216, an image data input unit 218, a digital signal processing unit 220, and an internal memory 222. As the configuration related to the printer, the digital camera with a printer includes the film delivery mechanism 52, a film delivery mechanism driving unit 230, the film transport mechanism 54, a film transport mechanism driving unit 232, the print head 56, a print head driving unit 234, and an image signal processing unit 236 for printing. As the configuration common to the digital camera and the printer, the digital camera with a printer includes a system controller 240, a work memory 242, a data memory 244, the monitor 22, a monitor driving unit 246, an operation unit 248, and a power supply unit 250. The system controller 240 functions as the overall control unit.

### Configuration Related to Digital Camera

### Imaging Lens Driving Unit

The imaging lens driving unit 212 is driving means of the imaging lens 12. The imaging lens driving unit 212 drives the focus lens, drives the stop 12a, and drives the shutter 12b. The imaging lens driving unit 212 drives the imaging lens 12 under the control of the system controller 240.

### Image Sensor Driving Unit

The image sensor driving unit 214 is driving means of the image sensor 42. The image sensor driving unit 214 drives the image sensor 42 under the control of the system controller 240.

### Analog Signal Processing Unit

The analog signal processing unit 216 receives a signal output from the image sensor 42, converts the received signal into a digital image signal by performing required signal processing such as correlative double sampling processing or amplification processing on the received signal, and outputs the converted digital image signal.

### Image Data Input Unit

The image data input unit 218 receives the digital image signal output from the analog signal processing unit 216 under the control of the system controller 240. One received image data item is stored in the work memory 242.

### Digital Signal Processing Unit

The digital signal processing unit 220 performs required signal processing such as demosaicing, white balance correction, gamma correction, or contour correction on the image data stored in the work memory 242, and generates predetermined image data including luminance data (Y data) and color difference data items (Cr and Cb data items).

The digital signal processing unit 220 processes the image data under the control of the system controller 240.

### Internal Memory

The internal memory 222 is an example of an image storage unit, and stores the image acquired through the capturing. For example, the internal memory 222 is a non-volatile memory such as electrically erasable programmable read only memory (EEPROM).

### Configuration Related to Printer

### Film Delivery Mechanism Driving Unit

The film delivery mechanism driving unit 230 is driving means of the film delivery mechanism 52. The film delivery mechanism driving unit 230 drives the claw 52a under the control of the system controller 240.

### Film Transport Mechanism Driving Unit

The film transport mechanism driving unit 232 is driving means of the film transport mechanism 54. The film transport mechanism driving unit 232 drives the transport roller pair 54A and the spreading roller pair 54B such that these roller pairs are rotated according to a command from the system controller 240.

### Print Head Driving Unit

The print head driving unit 234 is driving means of the print head 56. The print head driving unit 234 drives the print head 56 under the control of the system controller 240.

### Image Signal Processing Unit for Printing

The image signal processing unit 236 for printing generates image data for printing under the control of the system controller 240. The image data for printing is image data to be recorded on the instant film 110 by the print head 56. The print head 56 is driven based on the image data for printing generated by the image signal processing unit 236 for printing, and records the image on the instant film 110.

### Configuration Common to Digital Camera and Printer

### System Controller

The system controller 240 is the overall control unit of the digital camera with a printer 1. The system controller 240 is a computer, and provides various functions by executing a predetermined program.

In the digital camera with a printer 1 of the present embodiment, the system controller 240 functions a print control unit, a display control unit, and a capturing control unit.

### Work Memory

The work memory 242 is a memory for working. For example, the work memory 242 is a synchronous dynamic random access memory (SDRAM).

### Data Memory

The data memory 244 is a memory that stores a program for controlling, and various data items required in the controlling. The data memory 244 is a non-volatile memory such as EEPROM.

### Monitor Driving Unit

The monitor driving unit 246 is driving means of the monitor 22. The monitor driving unit 246 drives the monitor 22 under the control of the system controller 240.

### Operation Unit

The operation unit 248 includes the power ring 14, the first release button 16A, the second release button 16B, the rear operation unit 24, and the capturing mode switching lever 26. The operation unit 248 outputs a signal corresponding to an operation of each operation member to the system controller 240.

### Power Supply Unit

The power supply unit 250 supplies power to the units under the control of the system controller 240. The power supply unit 250 includes a battery as a power supply and a power supply circuit.

### Action

The digital camera with a printer 1 has, as the operation mode, the capturing mode and the playback mode. The digital camera with a printer 1 may capture the image, and may record the captured image in the internal memory 222 by setting the digital camera with a printer in the capturing mode. The digital camera with a printer is set in the playback mode, and thus, it is possible to play the image recorded in the internal memory 222.

In a case where the digital camera with a printer is set in the capturing mode, it is possible to immediately print the captured image, and in a case where the digital camera with a printer is set in the playback mode, it is possible to print the image being played.

Hereinafter, an operation of the digital camera with a printer 1 in each operation mode will be described.

### Capturing Mode

The digital camera with a printer 1 is activated in the state of the capturing mode in a case where the digital camera with a printer is powered on.

The digital camera with a printer 1 has, as the capturing mode, the auto mode (first capturing mode) and the manual mode (second capturing mode). The switching between the auto mode and the manual mode is performed by the capturing mode switching lever 26.

In a case where an image is captured in the auto mode, the printing process is automatically performed. Meanwhile, in a case where the image is captured in the manual mode, the captured image is displayed on the monitor 22, and the printing process is performed after the print instruction is waited.

### Auto Mode

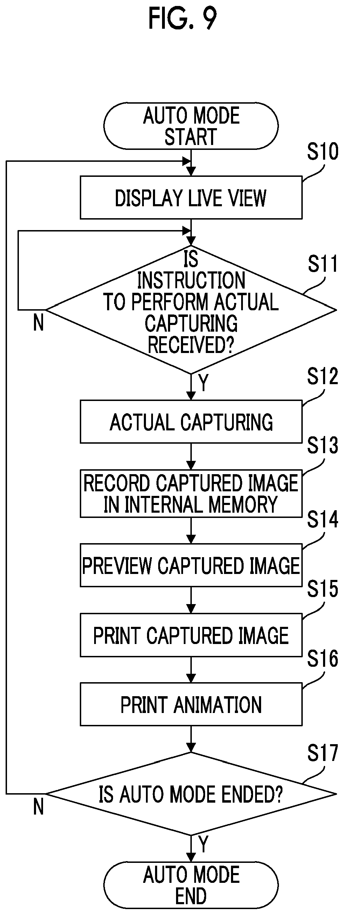

Fig. 9 is a flowchart showing a process procedure in the auto mode.

Initially, the system controller 240 displays live view on the monitor 22 (step S10). The live view means that the image caught by the image sensor 42 is displayed on the monitor 22 in real time. The live view is also referred to as through display.

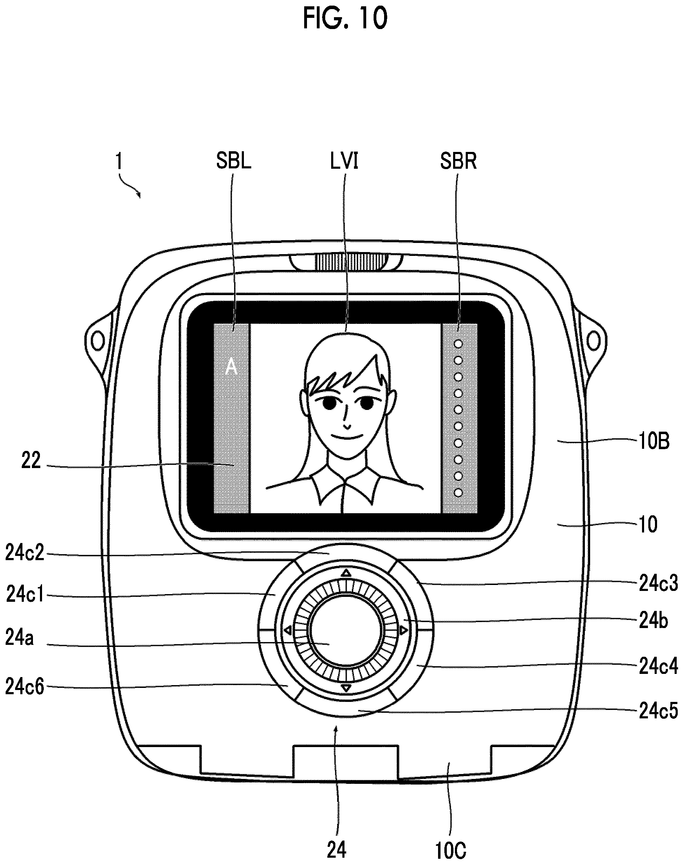

Fig. 10 is a diagram showing an example of the screen display of the monitor on which the live view is being displayed.

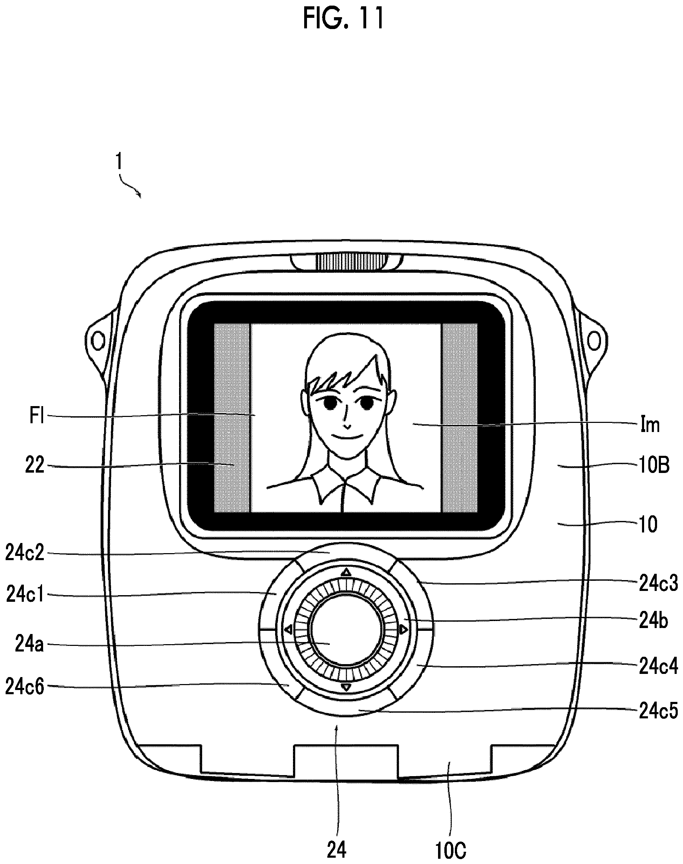

As shown in Fig. 11, a live view image LVI is displayed in the center on the screen of the monitor 22, and side bars SBL and SBR are displayed on both sides thereof.

Information of the capturing mode being set is displayed on the side bar SBL on the left side of the screen. The information of the capturing mode being set is represented by one alphabet character. The information of the capturing mode being set is represented by "A" in a case where the digital camera with a printer is set in the auto mode, and is represented by "M" in a case where the digital camera with a printer is set in the manual mode. Fig. 10 shows the screen display in a case where the digital camera with a printer is set in the auto mode, and thus, a character of "A" representing the auto mode is displayed on the side bar SBL on the left side of the screen.

The number of remaining films is represented on the side bar SBR on the right side of the screen. The number of remaining films is represented by dots. Specifically, the number of dots corresponding to the number of remaining films is represented in the same straight line at certain intervals. Fig. 10 shows an example in which the number of remaining films is 10. The color of the dots is changed in a case where the number of remaining films is equal to or less a certain number. Specifically, the dots are represented in white in a case where the number of remaining films is equal to or greater than three, and are represented in red in a case where the number of remaining films is equal to or less than two. In a case where the number of remaining films is equal to zero, ten gray dots are represented while being turned on and off. In a case where the instant film pack 100 is not loaded, and ten gray dots are also represented while being turned on and off.

The user determines photographic composition while seeing the image being displayed as the live view on the monitor 22, and checks a focusing state on a subject.

The system controller 240 determines whether or not an instruction to perform the actual capturing is received based on the signal from the operation unit 248 (step S11). The process of the actual capturing is performed according to the instruction to perform the actual capturing (step S12).

The instruction to perform the actual capturing is received by operating the fully push of the first release button 16A or the second release button 16B. As the previous stage, the capturing preparation is performed by operating the half push of the first release button 16A or the second release button 16B. That is, the brightness and distance of the subject are measured, and thus, the setting of the exposure value and the focusing are performed.

The instruction to perform the actual capturing is received by operating the fully push of the first release button 16A or the second release button 16B after the half push of the first release button or the second release button is operated, and the process of the actual capturing is performed (step S12). That is, the image sensor 42 is exposed with the set exposure value, and the image for recording is received. The received image is recorded as the captured image in the internal memory 222 (step S13).

The system controller 240 previews the captured image on the monitor 22 (step S14), and performs a printing process (step S15).

Fig. 11 is a diagram showing an example of the screen display of the monitor on which the image is being previewed.

As shown in Fig. 11, the image is previewed, and thus, the captured image is displayed in the center on the screen of the monitor 22.

As stated above, in a case where the image is captured in the auto mode, the printing process is automatically performed. That is, in the auto mode, the instruction to perform the actual capturing is simultaneously the print instruction. The print instruction for the image previewed on the monitor 22 is received.

The printing process is performed according to the following procedure. Initially, the image data for printing is generated by the image signal processing unit 236 for printing. Subsequently, one instant film 110 is delivered from the instant film pack 100 by the film delivery mechanism 52. The instant film 110 delivered from the instant film pack 100 is transported by the film transport mechanism 54 at a certain speed. The exposure part 112 is exposed by the print head 56 during the transporting, and the image is recorded on the exposure surface 110a. Thereafter, the exposed instant film 110 is transported between the spreading roller pair 54B, and the development treatment is performed on the instant film. The instant film is ejected from the print ejection port 28.

The instant film 110 is observed in the orientation in which the trap part 116 is at the top and the pod part 114 is at the bottom. Accordingly, the image is printed in an orientation in which the trap part 116 is at the top and the pod part 114 is at the bottom. Since the instant film 110 is ejected from the print ejection port 28 with the pod part 114 as the head, the instant film is ejected in a state in which the instant film is upside down. Accordingly, the image on the instant film is also upside down.

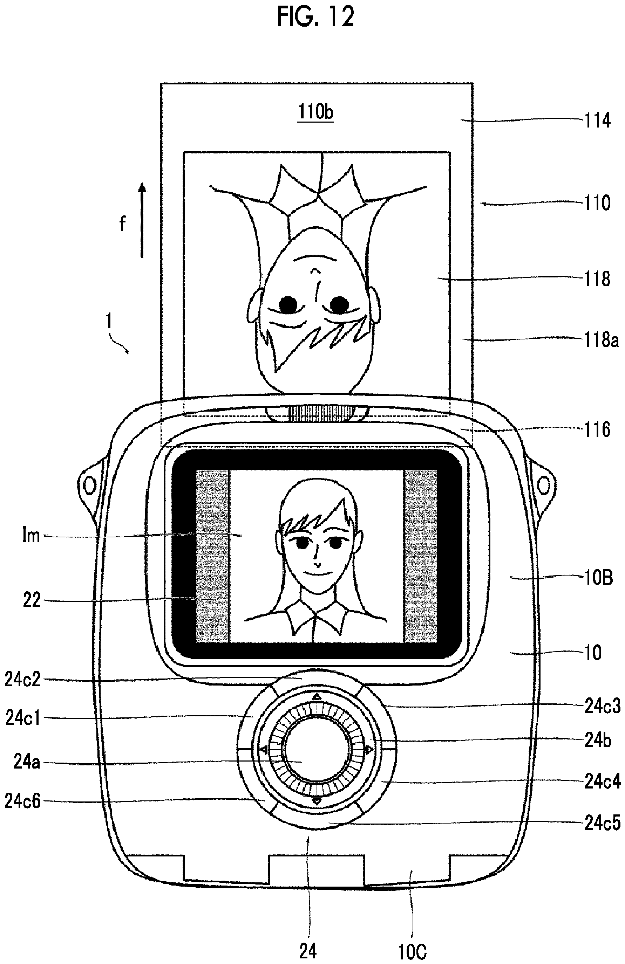

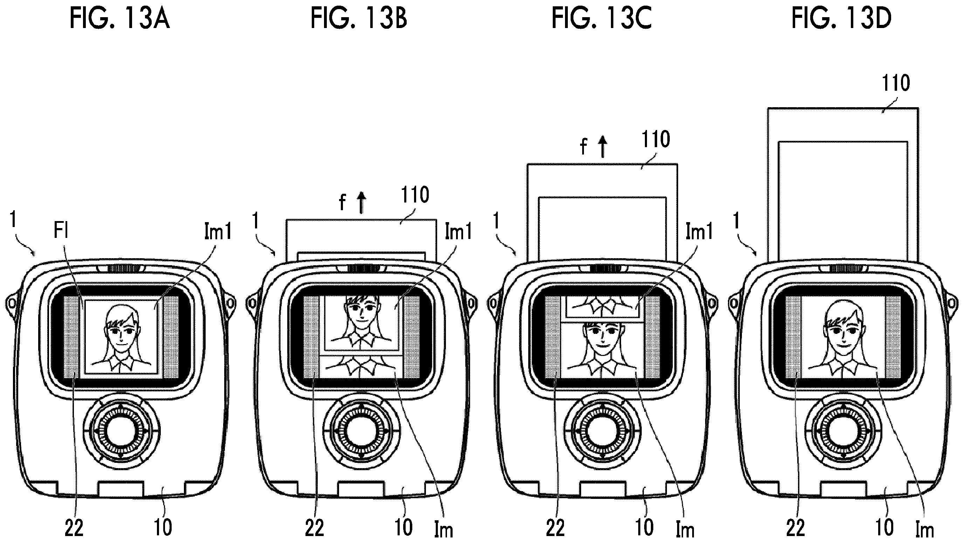

Fig. 12 is a diagram showing an ejection state of the instant film. Figs. 13A to13D show a state after the development treatment is completely ended. In Figs. 13A to 13D, a direction represented by an arrow f is an ejection direction of the instant film 110.

The instant film 110 is ejected from the top of the camera body 10, and is ejected in substantially parallel with the display surface of the monitor 22.

The ejection direction f of the instant film 110 is a direction parallel to a short side of the monitor 22, and is a direction facing a position directly above the top of the camera body 10. Accordingly, the instant film 110 is ejected upwards when viewed from the monitor 22.

The instant film 110 is ejected while the observation surface 110b thereof faces the rear of the camera body 10. That is, the instant film is ejected such that the image is displayed so as to be seen at the rear of the camera body 10.

The instant film 110 is ejected with the pod part 114 as the head. That is, the instant film is ejected in a state in which the pod part 114 thereof is at the top. In this case, as stated above, the image is printed in a state in which the pod part 114 is at the bottom. Accordingly, the instant film 110 is ejected from the camera body 10 in an orientation opposite to the orientation in which the instant film is actually observed. That is, the instant film is ejected in a state in which the image faces the bottom.

The system controller 240 performs a print animation process in line with the printing process. (step S16).

The print animation process is performed by displaying an imaging image to be printed as an image to be printed so as to be overlapped with an image being previewed on the monitor 22, moving the imaging image along the ejection direction of the medium, and removing the print image from the screen.

Figs. 13A to 13D are diagrams showing the transition of the screen display of the monitor in a case where the print animation process is performed. In Figs. 13A to 13D, the screen display is changed with time in the order of Figs. 13A, 13B, 13C, and 13D. Fig. 13A shows the screen display in a case where the printing is started, Figs. 13B and 13C show the screen display in a case where the printing is being performed (the instant film is being ejected), and Fig. 13D shows the screen display in a case where the printing is ended (the ejection is completed).

As shown in Fig. 13A, the system controller 240 initially displays an imaging image to be printed Im1 on the monitor 22. The imaging image to be printed Im1 is an image of a print to be output. In the present embodiment, the imaging image to be printed Im1 is an image acquired by adding a frame Fl to the image to be printed. The frame Fl is a white frame having a certain width, and is arranged so as to surround the entire circumference of the image.

As stated above, the image to be printed on the instant film 110 is displayed within the frame 118a (see Figs. 6 and 12). Accordingly, since the imaging image to be printed Im1 is the image acquired by adding the frame F1 to the image to be printed, it is possible to clarify that the image is to be printed.

As shown in Fig. 13A, the imaging image to be printed Im1 is displayed so as to be overlapped on the image previewed on the monitor 22. Accordingly, the image previewed as the image to be printed on the monitor 22 is hidden by the imaging image Im1, and the previewed image is not able to be visually perceived.

Thereafter, as shown in Figs. 13B to 13d, the system controller 240 moves the imaging image Im1 in the upward direction which the ejection direction f of the instant film 110, and removes the imaging image from the screen of the monitor 22. The movement of the imaging image Im1 is in line with the ejection of the instant film 110, and the removal of the imaging image is also completed simultaneously with the completion of the ejection of the instant film 110.

The image displayed under the imaging image Im1, that is, a printing target image Im is gradually displayed along with the movement of the imaging image Im1.

As stated above, the imaging image to be printed Im1 is removed from the screen by being moved along the ejection direction of the instant film 110. Thus, it is possible to recognize that the image is to be printed at a first glance, and it is possible to recognize the ejection direction of the print. Accordingly, it is possible to improve operability.

In a case where the imaging image to be printed Im1 is completely removed from the screen, the image Im hidden under the imaging image Im1 is completely displayed on the monitor 22, as shown in Fig. 13D. The image Im is an image previewed as the image to be printed on the monitor 22. The image Im is displayed, and thus, the user can check the printed image on the monitor 22.

The image Im for print checking is continuously displayed for a certain time. Thereafter, the system controller 240 determines whether or not the auto mode is ended (step S17). That is, based on the signal from the operation unit 248, the system controller determines whether or not the digital camera with a printer is powered off or whether or not the mode thereof is switched. In a case where it is determined that the auto mode is ended, the process in the auto mode is ended. In a case where it is determined that the auto mode is not ended, the process is returned to step S10. In this case, the display of the monitor 22 is switched to the live view.

As stated above, in a case where the image is captured in the auto mode, the captured image is automatically printed. The image Im to be printed is previewed on the monitor 22 in a case where the image is printed. The imaging image to be printed Im is displayed so as to be overlapped on the previewed image Im1, is moved on the screen along the ejection direction of the instant film 110, and is removed. Accordingly, it is possible to recognize the ejection direction of the instant film 110 at a first glance. After the image is removed, since the printed image Im is displayed on the monitor 22 again, it is possible to check the printed image Im on the screen. Particularly, in a case where the instant film is used as a medium to be printed, since it takes time until development is completed (until the image appears on the observation surface 1 10b), it is possible to immediately check the printed image on the screen.

### Manual Mode

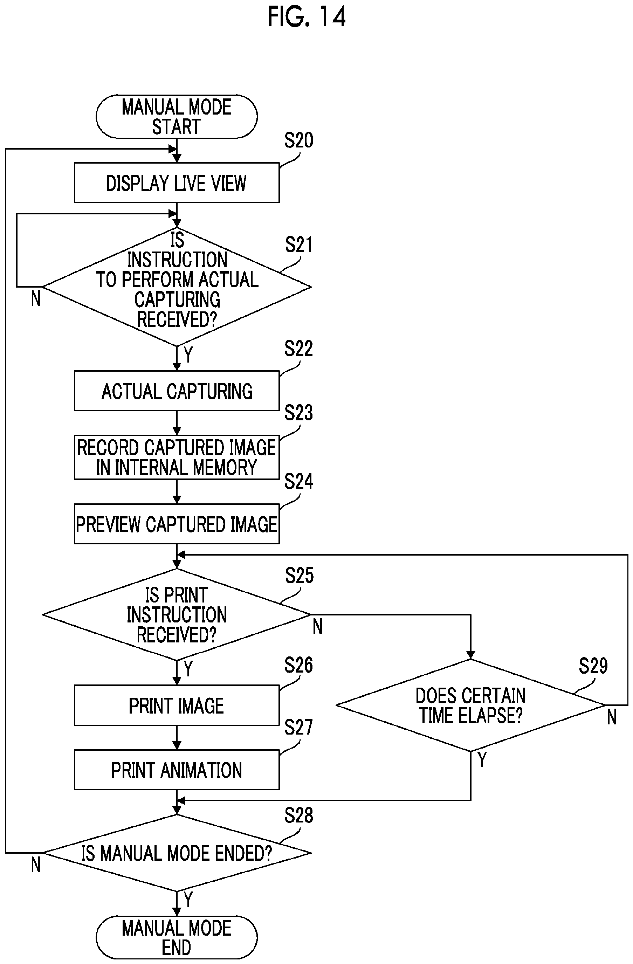

Fig. 14 is a flowchart showing a process procedure in the manual mode.

Initially, the system controller 240 displays the live view on the monitor 22 (step S20). That is, the image caught by the image sensor 42 is displayed on the monitor 22 in real time. Since the digital camera with a printer is set in the manual mode, a character of "M" representing the manual mode is displayed on the side bar SBL on the left side of the screen.

The system controller 240 determines whether or not the instruction to perform the actual capturing is received based on the signal from the operation unit 248 (step S21). The process of the actual capturing is performed according to the instruction to perform the actual capturing (step S22), and the captured image is recorded in the internal memory 222 (step s23).

Thereafter, the system controller 240 previews the captured image on the monitor 22 (step S24). The system controller determines whether or not the print instruction is received (step S25).

The print instruction is received by pushing the fourth function button 24c4 which is the print button. In a case where the fourth function button 24c4 is pushed, the system controller 240 displays the dialog for inquiring about the printing on the monitor 22.

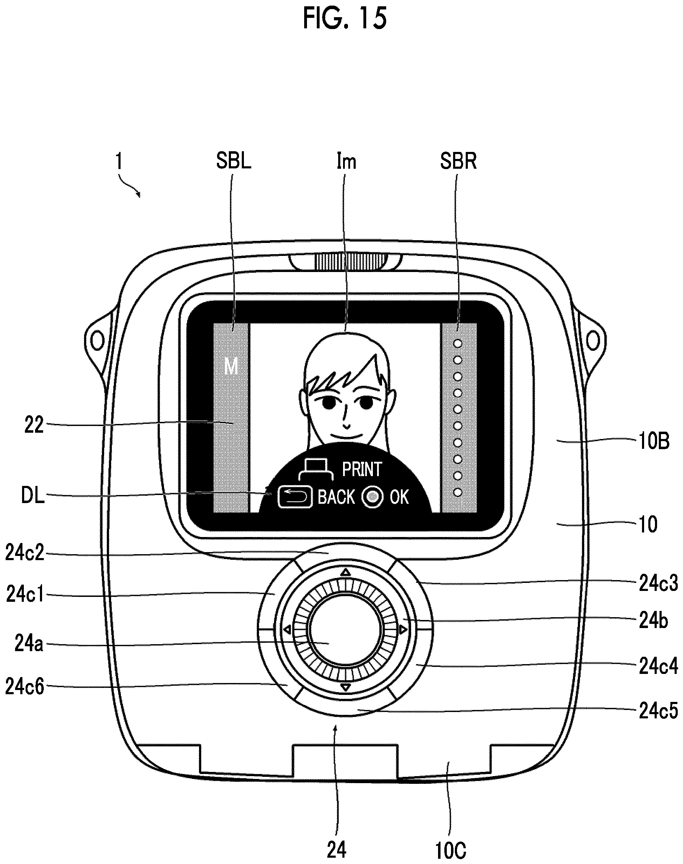

Fig. 15 is a diagram showing an example of the screen display of the monitor on which the dialog is displayed.

As shown in Fig. 15, a dialog DL is represented by a geometric semicircular shape, and is displayed so as to protrude from a lower edge of the screen. A geometric shape representing the printing and characters of "PRINT", a geometric shape representing the back button and characters of "BACK", and a geometric shape representing the OK button and characters of "OK" are displayed in the dialog DL. The dialog DL is displayed so as to be overlapped on the image being displayed which is a printing target image. The dialog DL is displayed, and thus, it is possible to recognize that the print instruction is to be confirmed in a case where the user pushes the menu button 24a which is the OK button and the print instruction is canceled in a case where the user pushes the fifth function button 24c5 which is the back button. In the digital camera with a printer 1 of the present embodiment, since the rear operation unit 24 has the circular shape, the dialog DL is the geometric semicircular shape which is a part of the circle, and thus, it is possible to clarify the relationship between the display of the dialog DL and the rear operation unit 24. The dialog DL is displayed so as to protrude directly upwards from the lower edge which is an edge closest to the rear operation unit 24, and thus, it is possible to further clarify the relationship between the display of the dialog DL and the rear operation unit 24.

In a case where the image being previewed is desired to be printed, the user pushes the fourth function button 24c4 which is the print button, and subsequently pushes the menu button 24a which is the OK button according to the display of the dialog DL. Accordingly, the print instruction is confirmed.

After the print instruction is received, in a case where the user rethinks and cancels the print instruction, the user pushes the fifth function button 24c5 which is the back button. Accordingly, the print instruction is canceled. In a case where the print instruction is canceled, the display of the monitor 22 is returned to the state before the instruction is received. That is, the dialog DL is removed, only the captured image is displayed on the monitor 22.

In a case where the print instruction is confirmed, the system controller 240 performs the printing process (step S26). The print animation process is performed in line with the printing process (step S27). That is, the image being previewed is moved along the ejection direction f of the instant film 110, and is removed from the screen.

In this case, the system controller 240 initially displays the imaging image to be printed such that the imaging image to be printed is overlapped with the image being previewed (see Fig. 13A). Thereafter, the imaging image is moved along the ejection direction f of the instant film 110, and is removed from the screen (see Figs. 13B to 13D). Accordingly, it is possible to recognize that the image is to be printed while seeing the display of the monitor 22 at a first glance, and it is possible to recognize the ejection direction of the print. After the imaging image is removed, since the printed image is displayed on the monitor 22 (see Fig. 13D), it is possible to check the printed image on the screen of the monitor 22 again.

The image (see Fig. 13D) for print checking is continuously displayed for a certain time. Thereafter, the system controller 240 determines whether or not the manual mode is ended (step S28). That is, based on the signal from the operation unit 248, the system controller determines whether or not the digital camera with a printer is powered off or whether or not the mode thereof is switched. In a case where it is determined that the manual mode is ended, the process in the manual mode is ended. In a case where the manual mode is not ended, the process is returned to step S20. In this case, the display of the monitor 22 is switched to the live view.

In step S25, in a case where it is determined that the print instruction for the image being previewed is not received, the system controller 240 determines whether or not a certain time elapses after the preview of the image is started (step S29). In a case where it is determined that the certain time elapses, the system controller determines whether or not the manual mode is ended (step S28). That is, in a case where the print instruction is not received within the certain time, the preview is ended, and the subsequent process is performed. In this case, the captured image is not printed.

The preview may be forcibly ended by the operation of the first release button 16A or the second release button 16B. In this case, in a case where the first release button 16A or the second release button 16B is half push-operated or fully push-operated during the previewing, the preview is forcibly ended.

As stated above, in a case where the image is captured in the manual mode, the captured image is displayed on the monitor 22, and the printing process is performed after the print instruction is waited. Accordingly, it is possible to print only an image desired to be printed in the manual mode. In a case where in a case where the image is printed, the imaging image to be printed is displayed so as to be overlapped on the previewed image, is moved on the screen along the ejection direction of the instant film 110, and is removed. Accordingly, it is possible to recognize the ejection direction of the instant film 110 at a first glance. After the image is removed, since the printed image is displayed on the monitor 22 again, it is possible to check the printed image on the screen.

### Playback Mode

The digital camera with a printer 1 may play the image recorded in the internal memory 222 by setting the digital camera with a printer in the playback mode. It is possible to print a desired image during the playback.

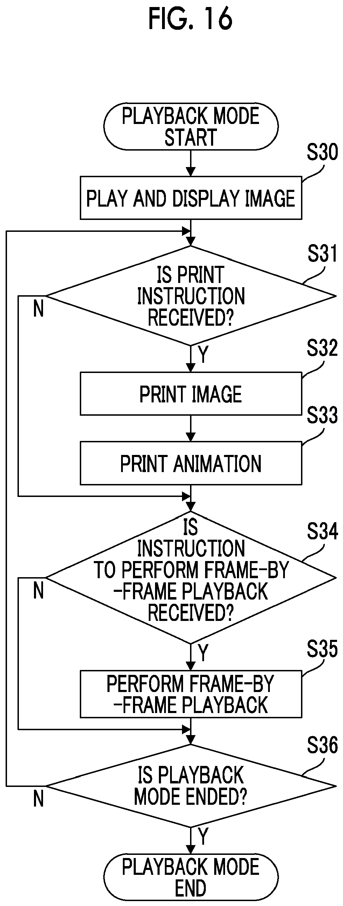

Fig. 16 is a flowchart showing a process procedure of the playback mode.

In a case where the digital camera with a printer is set in the playback mode, the system controller 240 reads out one image recorded in the internal memory 222, and displays the readout image on the monitor 22 (step S30). The readout image is an image recorded last in the internal memory 222, that is, an image captured last.

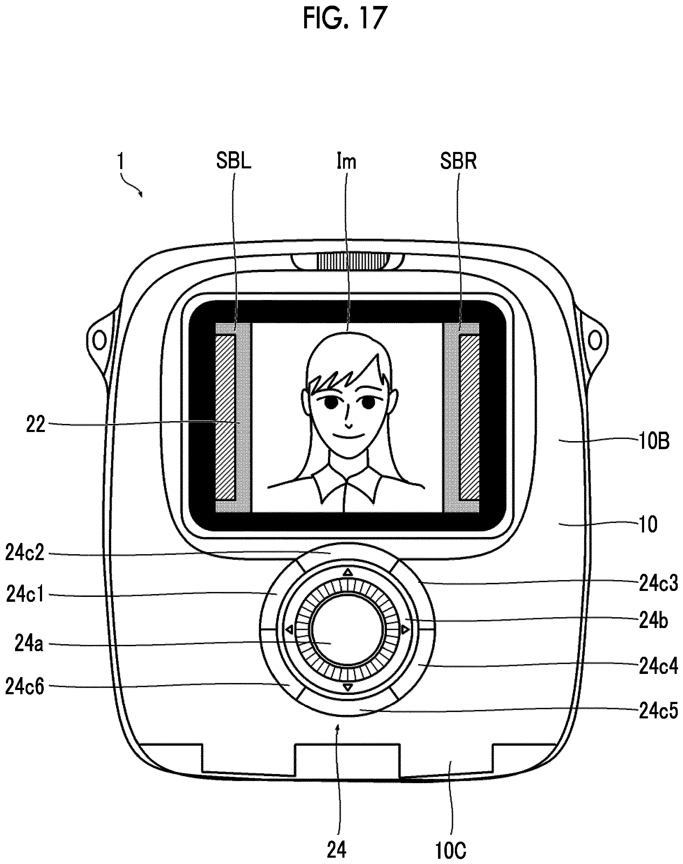

Fig. 17 is a diagram showing an example of the screen display of the monitor in a case where the digital camera with a printer is set in the playback mode.

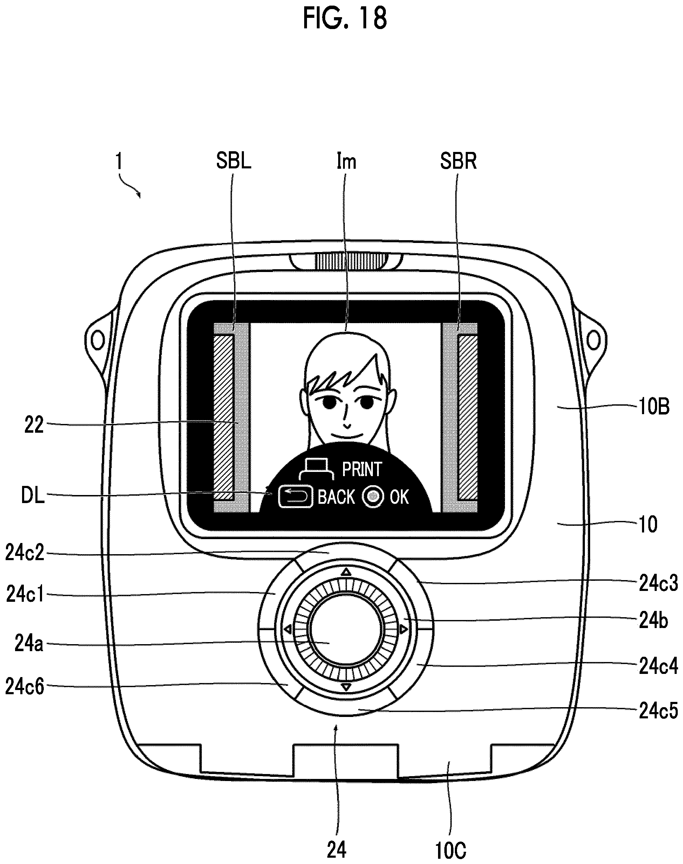

As shown in Fig. 18, the readout image Im is displayed in the center on the screen of the monitor 22, and the side bars SBL and SBR are displayed on both sides. In a case where a frame is sent in a forward direction, the brightness of a part (right end portion) of an image to be played next is lowered, and is displayed on the side bar SBL on the left side of the screen. In a case where frame-by-frame playback is performed in a reverse direction, the brightness of a part (left end portion) of an image to be played next is lowered, and is displayed on the side bar SBR on the right side of the screen.

The images are sequentially played one by one through the frame-by-frame playback. The playback is performed in order of frame numbers. The frame numbers are numbers given to the images recorded in the internal memory 222, and are given in the order that the images are sequentially captured. In a case where the frame-by-frame playback of the images is performed in the forward direction, the images are played in ascending order of frame numbers, and in a case where the frame-by-frame playback of the images is performed in the reverse direction, the images are played in descending order of frame numbers.

In a case where the images are played, the system controller 240 determines whether or not the print instruction is received based on the signal from the operation unit 248 (step S31).

The print instruction is received by pushing the fourth function button 24c4 which is the print button. In a case where the fourth function button 24c4 is pushed, the system controller 240 displays the dialog for inquiring about the printing on the monitor 22.

Fig. 18 is a diagram showing an example of the screen display of the monitor on which the dialog is displayed.

As shown in Fig. 18, a dialog DL is represented by a geometric semicircular shape, and is displayed so as to protrude from a lower edge of the screen. A geometric shape representing the printing and characters of "PRINT", a geometric shape representing the back button and characters of "BACK", and a geometric shape representing the OK button and characters of "OK" are displayed in the dialog DL. The dialog DL is displayed so as to be overlapped on the image being displayed which is a printing target image.

The dialog DL is displayed, and thus, it is possible to recognize that the print instruction is to be confirmed in a case where the user pushes the menu button 24a which is the OK button and the print instruction is canceled in a case where the user pushes the fifth function button 24c5 which is the back button.

The user pushes the menu button 24a which is the OK button in a case where the print instruction is confirmed. Accordingly, the print instruction is confirmed.

In a case where the print instruction is confirmed, the system controller 240 performs the printing process (step S32). The printing process is performed in line with the print animation process (step S33). That is, the image Im being displayed is moved along the ejection direction f of the instant film 110, and is removed from the screen.

In this case, the system controller 240 initially displays the imaging image to be printed such that the imaging image to be printed is overlapped on the image being displayed (see Fig. 13A). Thereafter, the imaging image displayed so as to be overlapped is moved along the ejection direction f of the instant film 110, and is removed from the screen (see Figs. 13B to 13D). Accordingly, it is possible to recognize that the image Im is to be printed while seeing the display of the monitor 22 at a first glance, and it is possible to recognize the ejection direction of the print. After the imaging image is removed, the original image, that is, the image for which the print instruction is received is displayed again (see Fig. 13D), and thus, it is possible to check the printed image again.

Thereafter, the system controller 240 determines whether or not an instruction to perform the frame-by-frame playback is received based on the signal from the operation unit 248 (step S34).

An operation of the frame-by-frame playback is performed by the command dial 24b. In a case where the command dial 24b is pushed in the rightward direction, an instruction to perform the frame-by-frame playback in the forward direction is received. In a case where the command dial 24b is pushed in the leftward direction, an instruction to perform the frame-by-frame playback in the reverse direction is received. The frame-by-frame playback of the images is performed one by one. That is, whenever the command dial 24b is pushed once in the rightward direction, the frame-by-frame playback of the images is performed in the forward direction one by one. Whenever the command dial 24b is pushed once in the leftward direction, the frame-by-frame playback of the images is performed in the reverse direction one by one.

The system controller 240 determines whether or not an instruction to perform the frame-by-frame playback is received based on the signal from the operation unit 248 (step S34). In a case where the instruction to perform the frame-by-frame playback is received, the frame-by-frame playback is performed in the instructed direction (step S35). That is, in a case where the instruction to perform the frame-by-frame playback in the forward direction is received, the frame-by-frame playback is performed in the forward direction, and in a case where the instruction to perform the frame-by-frame playback in the reverse direction is received, the frame-by-frame playback is performed in the reverse direction.

Thereafter, the system controller 240 determines whether or not the playback mode is ended (step S36). That is, based on the signal from the operation unit 248, the system controller determines whether or not the digital camera with a printer is powered off or whether or not the mode thereof is switched. In a case where it is determined that the playback mode is ended, the process in the playback mode is ended.

As mentioned above, the digital camera with a printer is set in the playback mode, and thus, it is possible to play the image recorded in the internal memory 222 on the monitor 22. It is possible to print the image being displayed on the monitor 22. In the image is printed, the imaging image to be printed is displayed so as to be overlapped on the image for which the print instruction is received, is moved on the screen along the ejection direction of the instant film 110, and is removed. Accordingly, it is possible to recognize the ejection direction of the instant film 110 at a first glance. After the image is removed, since the image for which the print instruction is received is displayed on the monitor 22 again, it is possible to check the printed image on the screen.

### Modification Example

### Modification Example of Print Animation

### Modification Example of Image being Displayed as Image to be Printed on Monitor

In a case where the print animation is performed, the brightness and/or saturation of the image to be displayed so as to be overlapped under the imaging image may be changed. Accordingly, it is easy to distinguish between the image and the imaging image, and it is possible to further improve operability.

In this case, in a case where the print instruction is received, the system controller 240 changes the brightness and/or saturation of the image being displayed on the monitor 22, that is, the image for which the print instruction is received. Immediately after the imaging image is displayed, since the image is hidden by the imaging image and the image is not able to be visually perceived, it is possible to actually recognize an effect after the imaging image is moved.

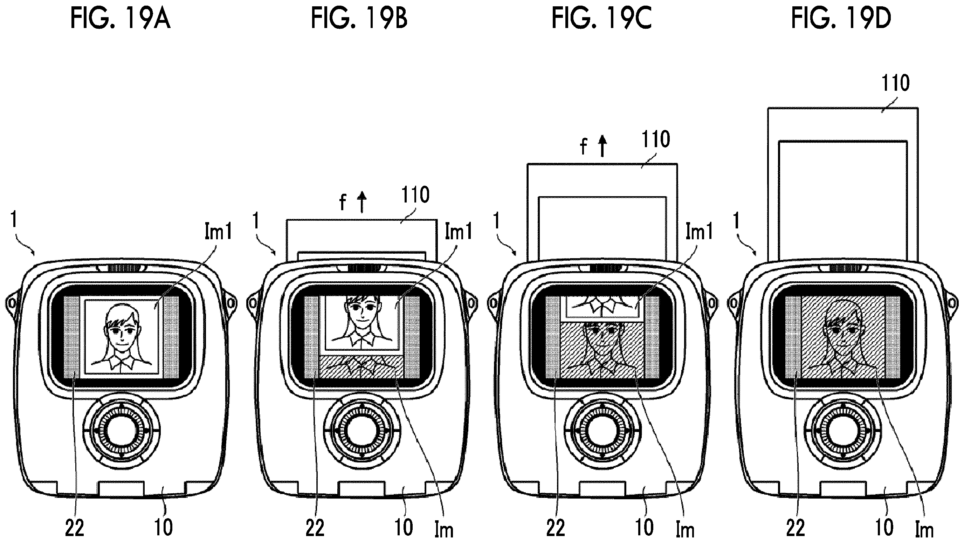

Figs. 19A to 19D are diagrams showing modification examples of the transition of the screen display of the monitor in a case where the print animation process is performed.

In Figs. 19A to 19D, an example in which the brightness of the image Im being displayed as the image to be printed on the monitor 22 is lowered is shown. In Figs. 19A to 19D, the screen display is changed with time in the order of Figs. 19A, 19B, 19C, and 19D. Fig. 19A shows the screen display in a case where the printing is started, Figs. 19B and 19C show the screen display in a case where the printing is being performed (the instant film is being ejected), and Fig. 19D shows the screen display in a case where the printing is ended (the ejection is completed).

As shown in Fig. 19A, in a case where the print instruction for the image being displayed on the monitor 22 is received, the imaging image to be printed Im1 is displayed on the image being displayed on the monitor 22.

As shown in Figs. 19B to 19D, the brightness of the image (image for which the print instruction is received) Im being displayed on the monitor 22 is lowered to a certain level, and then the image is displayed. Accordingly, even in a case where the imaging image to be printed Im1 is displayed so as to be overlapped on the image, it is possible to easily distinguish between these images. As shown in Fig. 19D, even after the imaging image Im1 is completely removed, the image Im of which the brightness is lowered is displayed, and thus, it is possible to easily distinguish that the image being displayed is printed.

Although it has been described in the present example that the brightness is lowered, the saturation may be raised or lowered, or both the brightness and the saturation may be lowered or raised. That is, the image may be displayed so as to be distinguished from the imaging image Im1.

### Print Imaging image

In a case where the imaging image to be printed is displayed, the display may be displayed in the form of animation. For example, the image being displayed as the image to be printed on the monitor 22 may gradually contract, the frame around the image may gradually appear, and the imaging image to be printed may appear on the monitor.

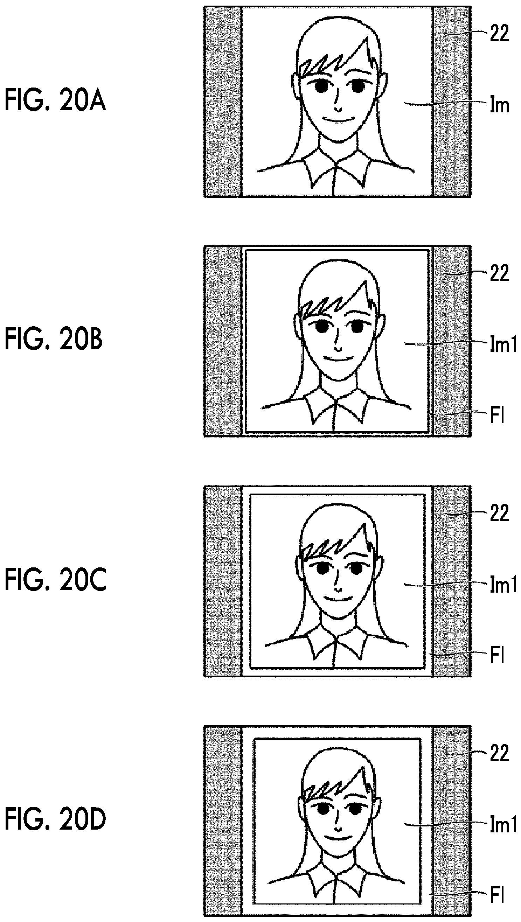

Figs. 20A to 20D are diagrams showing the transition of the screen display of the monitor in a case where the imaging image to be printed is displayed in the form of animation in a case where the imaging image to be printed appears. In Figs. 20A to 20D, the screen display is changed with time in the order of Figs. 20A, 20B, 20C, and 20D.

As shown in Figs. 20A to 20D, the printing target image Im being displayed on the monitor 22 gradually contracts, and the frame Fl gradually appears around the printing target image. Thus, the imaging image to be printed Im1 appears on the monitor 22. Accordingly, it is possible to smoothly display the imaging image to be printed Im1imaging image. Since the imaging image to be printed is displayed in the form of animation, it is possible to raise the user's attention, and it is possible to further improve operability.

Although it has been described in the aforementioned embodiment that the imaging image to be printed is the image acquired by adding the frame to the image to be printed, the imaging image to be printed is not limited thereto. For example, the imaging image to be printed may be an image without the frame (as it is called an image of a print without an edge). In this case, the imaging image to be printed is the same image as the image for which the print instruction is received.

Although it has been described in the aforementioned embodiment that the frame having the certain width is displayed, a frame of which upper and lower widths (marginal widths) are different may be displayed according to a frame of an instant film to be used in a case where the frame is displayed.

### Display Direction of Image

In the digital camera with a printer 1 of the present embodiment, the orientation of the image to be displayed on the monitor 22 and the orientation of the image on the instant film to be ejected from the print ejection port 28 are different. In a case where the orientation of the image on the monitor and the orientation of the image on the instant film are different in this manner, after the orientation of the imaging image to be printed and the orientation of the image on the instant film match each other, the imaging image to be printed may be removed from the screen.

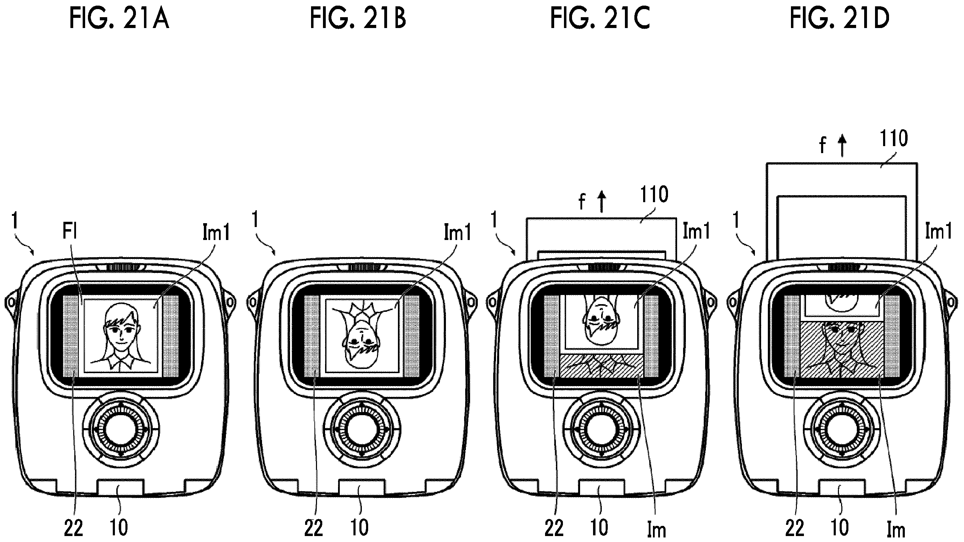

Figs. 21A to 21D are diagrams showing examples of the print animation in a case where the orientation of the image on the instant film and the orientation of the imaging image to be printed match each other and the imaging image to be printed is removed from the screen. In Figs. 21A to 21D, the screen display is changed with time in the order of Figs. 21A, 21B, 21C, and 21D.

Fig. 21A shows the screen display immediately after the print instruction is received. As shown in Figs. 21A to 21D, the print instruction is received, and thus, the imaging image to be printed Im1 is displayed so as to be overlapped with the image being displayed on the monitor 22.

Thereafter, as shown in Fig. 21B, the orientation thereof is changed by rotating the imaging image to be printed Im1, and matches the orientation of the image to be printed on the instant film 110. Specifically, the orientation of the imaging image to be printed is rotated by 180 degrees, and the imaging image to be printed Im1 is upside down. As stated above, the image is printed on the instant film 110 ejected from the print ejection port 28 so as to be oriented downwards. Accordingly, the imaging image to be printed Im1 is upside down, and thus, it is possible to match the orientation of the imaging image Im1 to be displayed on the monitor 22 with the orientation of the image to be printed on the instant film 110.

Thereafter, as shown in Figs. 21C and 21D, the imaging image to be printed Im1 is moved along the ejection direction of the instant film 110 in line with the ejection of the instant film 110, and is removed from the screen.

As shown in Figs. 21B to 21D, the image to be displayed under the imaging image Im1, that is, the image Im for which the print instruction is received is not rotated and is displayed with no change. Accordingly, it is possible to easily check the printed image Im.

As stated above, the orientation of the imaging image to be printed Im1 to be displayed on the monitor 22 and the orientation of the image to be printed on the instant film 110 match each other, and thus, it is possible to easily recognize the orientation of the image to be printed on the instant film 110.

### Ejection Direction of Instant Film

Although it has been described in the aforementioned embodiment that the instant film 110 is ejected upwards from the top of the camera body 10, the ejection direction of the instant film 110 is not limited thereto. In addition, for example, the instant film may be ejected downwards from the bottom of the camera body 10, the instant film may be ejected rightwards from the right side thereof, or the instant film may be ejected leftwards from the left side thereof. In a case where the imaging image to be printed is removed from the monitor 22, the imaging image to be printed is moved along the ejection direction of the instant film 110, and is removed.

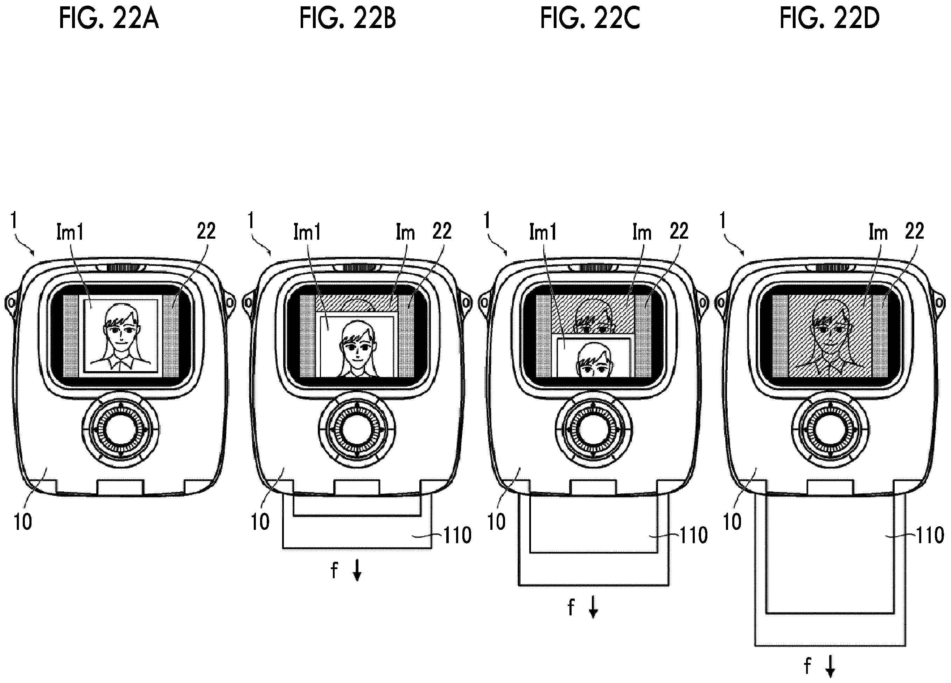

Figs. 22A to 22D are diagrams showing examples of the print animation in a case where the instant film is ejected from the bottom of the camera body. In Figs. 22A to 22D, the screen display is changed with time in the order of Figs. 22A, 22B, 22C, and 22D. Fig. 22A shows the screen display in a case where the printing is started, Figs. 22B and 22C show the screen display in a case where the printing is being performed (the instant film is being ejected), and Fig. 22D shows the screen display in a case where the printing is ended (the ejection is completed).

The digital camera with a printer 1 shown in Figs. 22A to 22D includes the print ejection port in the bottom of the camera body 10. The printed instant film 110 is ejected directly downwards from the bottom of the camera body 10. In Figs. 22A to 22D, a direction represented by an arrow f is an ejection direction of the instant film 110.

In this case, as shown in Figs. 22A to 22D, the imaging image to be printed Im1 is moved in the downward direction which is the ejection direction of the instant film 110, and is removed from the screen.

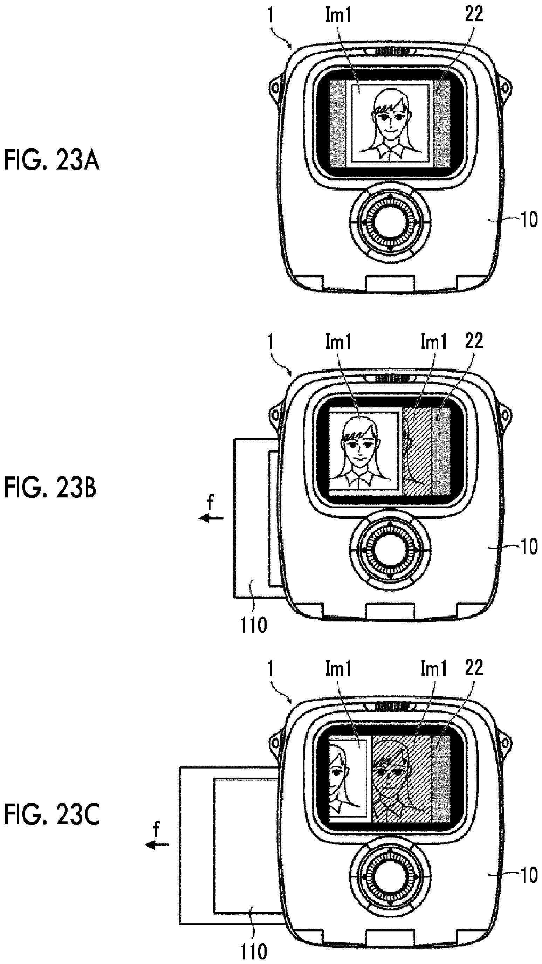

Figs. 23A to 23C are diagrams showing examples of the print animation in a case where the instant film is ejected from the side of the camera body. In Figs. 23A to 23C, the screen display is changed with time in the order of Figs. 23A, 23B, and 23C. Fig. 23A shows the screen display in a case where the printing is started, and Figs. 23B and 23C show the screen display in a case where the printing is being performed (the instant film is being ejected).

The digital camera with a printer 1 shown in Figs. 23A to 23C includes the print ejection port in the left side when viewed from the rear of the camera body 10. The printed instant film 110 is ejected leftwards from the left side when viewed from the rear of the camera body 10. In Figs. 23A to 23C, a direction represented by an arrow f is an ejection direction of the instant film 110.

In this case, as shown in Figs. 23A to 23C, the imaging image to be printed Im1 is moved to the leftward direction which is the ejection direction of the instant film 110, and is removed from the screen.

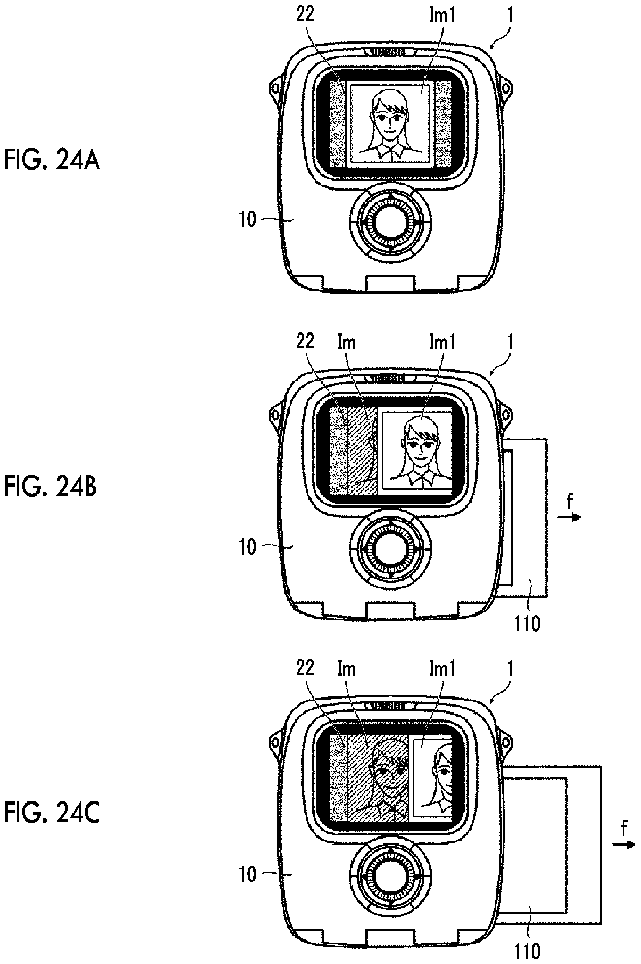

Figs. 24A to 24C are diagrams showing examples of the print animation in a case where the instant film is ejected from the side of the camera body. In Figs. 24A to 24C, the screen display is changed with time in the order of Figs. 24A, 24B, and 24C. Fig. 24A shows the screen display in a case where the printing is started, and Figs. 24B and 24C show the screen display in a case where the printing is being performed (the instant film is being ejected).

The digital camera with a printer 1 shown in Figs. 24A to 24C includes the print ejection port in the right side when viewed from the rear of the camera body 10. The printed instant film 110 is ejected rightwards from the right side when viewed from the rear of the camera body 10. In Figs. 24A to 24C, a direction represented by an arrow f is an ejection direction of the instant film 110.

In this case, as shown in Figs. 24A to 24C, the imaging image to be printed Im1 is moved in the rightward direction which is the ejection direction of the instant film 110, and is removed from the screen.

As mentioned above, in a case where the imaging image to be printed is removed from the monitor 22, the image is moved along the ejection direction of the instant film 110, and is removed from the screen.

Although it has been described in the aforementioned example that the image is moved without changing the orientation of the imaging image to be printed Im1 and is removed from the screen, the image may be removed after the orientation of the imaging image Im1 and the orientation of the image to be printed on the instant film 110 match each other.

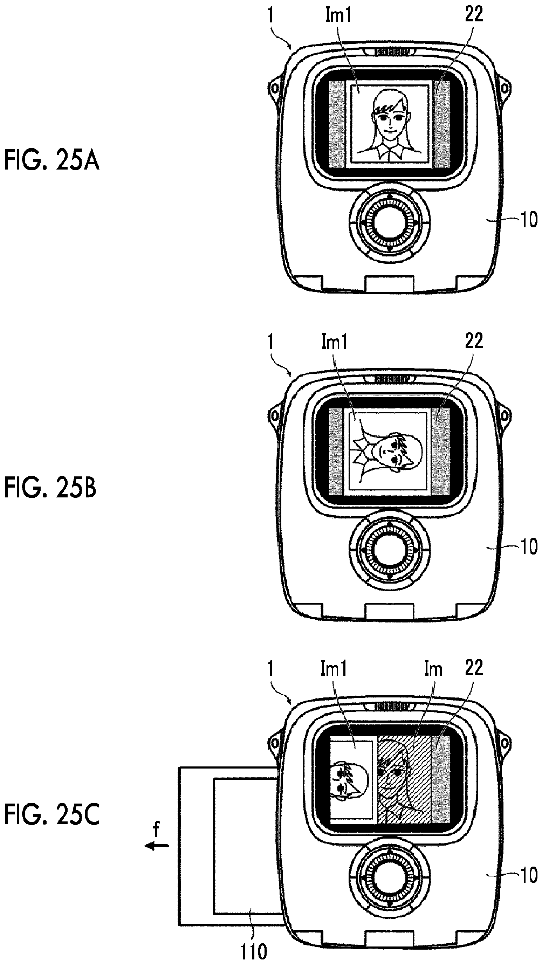

Figs. 25A to 25C are diagrams showing examples of the print animation in a case where the image is removed after the orientation of the imaging image to be printed matches the orientation of the image to be printed on the instant film in the digital camera with a printer in which the instant film is ejected from the side of the camera body. In Figs. 25A to 25C, the screen display is changed with time in the order of Figs. 25A, 25B, and 25C.

The digital camera with a printer 1 shown in Figs. 25A to 25C includes the print ejection port in the left side when viewed from the rear of the camera body 10, and the instant film 110 is ejected leftwards. In this case, the orientation of the image on the instant film to be ejected from the print ejection port is the horizontal direction, and the image is oriented rightwards.

Fig. 25A shows screen display immediately after the print instruction is received. As shown in Fig. 25A, the print instruction is received, and thus, the imaging image to be printed Im1 is displayed so as to be overlapped on the image being displayed.

Thereafter, as shown in Fig. 25B, the orientation of the imaging image to be printed Im1 is changed by rotating the imaging image to be printed, and matches the orientation of the image to be printed on the instant film 110. Specifically, the imaging image to be printed is rotated in the clockwise direction by 90 degrees, and the imaging image to be printed Im1 is oriented rightwards. Accordingly, it is possible to match the orientation of the imaging image Im1 to be displayed on the monitor 22 with the orientation of the image to be printed on the instant film 110.

Thereafter, as shown in Fig. 25C, the imaging image to be printed Im1 is moved along the ejection direction of the instant film 110 in line with the ejection of the instant film 110, and is removed from the screen.

As stated above, the orientation of the imaging image to be printed Im1 and the orientation of the image to be printed on the instant film 110 match each other, and thus, it is possible to easily recognize the orientation of the image to be printed on the instant film 110.

### Movement of Image

In a case where the imaging image to be printed is removed from the screen, it is preferable that the image is moved in synchronization with an ejection speed of the instant film and is removed from the screen. Accordingly, it is possible to recognize an ejection state of the instant film 110 from the display of the monitor 22 at a first glance.

### Image to be Printed

Although it has been described in the aforementioned embodiment that one image is printed on one instant film, a plurality of images may be printed on one instant film (so-called split print). In this case, one screen is split into a plurality of areas, and one image is generated by fitting the images into the areas. In this case, the generated image is the printing target image, and is the image constituting the imaging image to be printed.

The image may be processed, and the processed image may be printed. For example, in the manual mode, the previewed captured image may be processed, and the processed image may be printed. In this case, the processed image is printed, and is recorded in the internal memory 222. In the playback mode, the image being played may be processed, and the processed image may be printed. In this case, the processed image is the printing target image, and is the image constituting the imaging image to be printed.

### Method of Acquiring Image to be Printed

Although it has been described in the aforementioned embodiment that the captured image is printed, an image acquired from an external device may be printed. In this case, the digital camera with a printer includes a communication unit communicating with the external device.

### Modification Example of Storage Unit

Although it has been described in the aforementioned embodiment that the captured image is recorded in the internal memory 222, the image may be recorded in a detachable storage device such as a memory card. In this case, a card slot is provided in the camera body 10.

### Application to Printer

Although it has been described in the aforementioned embodiment that the present invention is applied to the digital camera with a printer, the application of the present invention is not limited thereto. The present invention may be applied to a printer.

### Printing Method

Although it has been described in the aforementioned embodiment that the instant film is used as a medium and the image is printed using the exposure head, the medium to be used and the printing method are not limited thereto. In addition, for example, thermal paper may be used as the medium, and the image may be printed using a thermal head. The image may be printed on the medium by using an ink ribbon and a thermal head, or the image may be printed by using an inkjet head.

### Other Modification Examples

The amount of remaining battery may be monitored, and in a case where the amount of remaining battery is equal to or less than a certain amount, the reception of the print may be stopped. Accordingly, it is possible to prevent the battery from being flat during the printing.

### Explanation of References

1: digital camera with printer
10: camera body
10A: main body
10B: back cover
10C: hinge
12: imaging lens
12a: stop
12b: shutter
14: power ring
16A: first release button
16B: second release button
18: flash
20: auxiliary light lamp
22: monitor
24: rear operation unit
24a: menu button
24b: command dial
24c1: first function button
24c2: second function button
24c3: third function button
24c4: fourth function button
24c5: fifth function button
24c6: sixth function button
26: capturing mode switching lever
28: print ejection port
30: unlocking lever
42: image sensor
50: film loading room
52: film delivery mechanism
52a: claw
54: film transport mechanism
54A: transport roller pair
54B: spreading roller pair
56: print head
100: instant film pack
110: instant film
110a: exposure surface
110b: observation surface
112: exposure part
114: pod part
114a: development treatment liquid pod
116: trap part
116a: absorbing material
118: observation part
118a: frame
120: case
120a: opening
120b: ejection port
120c: claw opening
212: imaging lens driving unit
214: image sensor driving unit
216: analog signal processing unit
218: image data input unit
220: digital signal processing unit
222: internal memory
230: film delivery mechanism driving unit
232: film transport mechanism driving unit
234: print head driving unit
236: image signal processing unit for printing
240: system controller
242: work memory
244: data memory
246: monitor driving unit
248: operation unit
250: power supply unit
DL: dialog
F: utilization direction of instant film
f: ejection direction of instant film
Fl: frame surrounding image
Im: image
Im1: print imaging image
LVI: live view image
SBL: left side bar
SBR: right side bar
S10 to S17: process procedure in auto mode
S20 to S29: process procedure in manual mode
S30 to S36: process procedure in playback mode

## Claims

1. A printer comprising:
a print unit (52, 54, 56) that prints an image on a medium;
a display unit (22);
a display control unit that displays a printing target image (Im) on the display unit (22);
a print instruction unit that transmits an instruction to print the printing target image (Im) being displayed on the display unit (22); and
a print control unit that causes the print unit (52, 54, 56) to print the printing target image being displayed on the display unit (22) in a case where the instruction to print the printing target image is received from the print instruction unit,
**characterised in that** the display control unit displays an imaging image (Im1) of the printing target image such that the imaging image (Im1) overlaps printing target image being displayed (Im) on the display unit (22), and in a case where the instruction to print the image is received from the print instruction unit, moves the imaging image (Im1) along an ejection direction (f) of the medium, to remove the imaging image (Im1) from a screen of the display unit (22), and gradually displays the printing target image being displayed (Im) hidden under the imaging image (Im1) along with the movement of the imaging image (Im1)

2. The printer according to claim 1,
wherein the display control unit changes brightness and/or saturation of the printing target image (Im) being displayed on the display unit (22) in a case where the instruction to print the image is received from the print instruction unit.

3. The printer according to claim 1 or 2,
wherein the imaging image (Im1) is an image acquired by adding a frame to the printing target image to be printed.

4. The printer according to claim 3,
wherein the display control unit causes the imaging image (Im1) to appear by gradually contracting the printing target image being displayed on the display unit (22) and causes the frame to gradually appear around the printing target image being displayed on the display unit (22) in a case where the instruction to print the printing target image is received from the print instruction unit.

5. The printer according to any one of claims 1 to 4,
wherein the display control unit moves the imaging image (Im1) in synchronization with an ejection speed of the medium, and removes the imaging image (Im1) from the screen.

6. The printer according to any one of claims 1 to 5,
wherein the display control unit displays the imaging image (Im1) such that an orientation of the imaging image (Im1) matches an orientation of the printing target image to be printed on the medium.

7. The printer according to any one of claims 1 to 6, further comprising:
a confirmation unit (24a) that confirms the instruction to print the printing target image from the print instruction unit; and
a cancellation unit (24c5) that cancels the instruction to print the printing target image from the print instruction unit,
wherein the display control unit displays a dialog (DL) for inquiring about printing on the display unit (22) in a case where the instruction to print the printing target image is received from the print instruction unit.

8. The printer according to claim 7,
wherein the display control unit displays the dialog (DL) from an edge of the screen in a case where the instruction to print the printing target image is received from the print instruction unit.

9. The printer according to any one of claims 1 to 8,
wherein the print unit (52, 54, 56) prints the printing target image on an instant film.

10. A digital camera with a printer comprising:
an image sensor;
an image storage unit;
a capturing instruction unit that transmits an instruction to capture an image;
a capturing control unit that captures an image by the image sensor according to the instruction to capture the image from the capturing instruction unit, and stores the acquired image in the image storage unit;
the printer according to any one of claims 1 to 9; and
an operation mode switching unit that switches between a capturing mode and a playback mode, as an operation mode,
wherein the display control unit displays, as a printing target image (Im) , an image stored in the image storage unit on the display unit (22) in a case where the operation mode is set to the playback mode, and displays an imaging image (Im1) of the printing target image such that the imaging image (Im1) to be printed overlaps the printing target image being displayed on the display unit (22), and in a case where the instruction to print the printing target image is received from the print instruction unit moves the imaging image (Im1) along an ejection direction of the medium, to remove the imaging image (Im1) from a screen of the display unit (22) and gradually displays the printing target image being displayed (Im) hidden under the imaging image (Im1) along with the movement of the imaging image (Im1).

11. The digital camera with a printer according to claim 10, further comprising:
a capturing mode switching unit (26) that switches between a first capturing mode and a second capturing mode, as the capturing mode,
wherein, in a case where the capturing mode is set to the first capturing mode and an image is captured, the print control unit causes the print unit (52, 54, 56) to print the captured image, and
in a case where the capturing mode is set to the second capturing mode and capturing is performed, the display control unit displays, as the printing target image (Im), the captured image on the display unit (22), and the print control unit causes the print unit (52, 54, 56) to print the captured image, and the display control unit displays the imaging image (Im1) of the printing target image such that the imaging image (Im 1) to be printed overlaps the printing target image being displayed on the display unit (22), moves the imaging image (Im1) along an ejection direction of the medium, and removes the imaging image (Im1) from the screen in a case where an instruction to print the printing target image being displayed on the display unit (22) is received.

12. An information display method of a printer including a display unit (22), the method comprising:
a step of displaying a printing target image (Im) on the display unit (22); and
a step of displaying an imaging image (Im1) of the printing target image such that the imaging image (Im1) to be printed overlaps the printing target image being displayed on the display unit (22), and in a case where the instruction to print the printing target image is received, moving the imaging image (Im1) along an ejection direction (f) of a medium on which the printing target image is printed, to remove the imaging image (Im1) from a screen of the display unit (22) and gradually displaying the printing target image being displayed (Im) hidden under the imaging image (Im1) along with the movement of the imaging image (Im1).

## Patentansprüche

1. Drucker, umfassend:
eine Druckeinheit (52, 54, 56), die ein Bild auf einem Medium druckt;
eine Anzeigeeinheit (22);
eine Anzeigesteuereinheit, die ein Druckzielbild (Im) auf der Anzeigeeinheit (22) anzeigt;
eine Druckanweisungseinheit, die eine Anweisung, das Druckzielbild (Im) zu drucken, das auf der Anzeigeeinheit (22) angezeigt wird, überträgt; und
eine Drucksteuereinheit, die die Druckeinheit (52, 54, 56) veranlasst, das Druckzielbild, das auf der Anzeigeeinheit (22) angezeigt wird, in einem Fall zu drucken, wo die Anweisung, das Druckzielbild zu drucken, von der Druckanweisungseinheit empfangen wird,
**dadurch gekennzeichnet, dass** die Drucksteuereinheit ein Abbildungsbild (Im1) des Druckzielbilds derart anzeigt, dass das Abbildungsbild (Im1) das auf der Anzeigeeinheit (22) angezeigte Druckzielbild (Im) überlagert, und in einem Fall, wo die Anweisung das Bild zu drucken von der Druckanweisungseinheit empfangen wird, das Abbildungsbild (Im1) entlang einer Auswurfrichtung (f) des Mediums bewegt, um das Abbildungsbild (Im1) von einem Bildschirm der Anzeigeeinheit (22) zu entfernen, und schrittweise das angezeigte Druckzielbild (Im), das unter dem Abbildungsbild (Im1) versteckt ist, gemeinsam mit der Bewegung des Abbildungsbilds (Im1) anzeigt.

2. Drucker nach Anspruch 1,
wobei die Anzeigesteuereinheit Helligkeit und/oder Sättigung des auf der Anzeigeeinheit (22) angezeigten Druckzielbilds (Im) in einem Fall ändert, wo die Anweisung das Bild zu drucken, von der Druckanweisungseinheit empfangen wird.

3. Drucker nach Anspruch 1 oder 2,
wobei das Abbildungsbild (Im1) ein Bild ist, das erhalten wird, indem ein Rahmen zu dem zu druckenden Druckzielbild hinzugefügt wird.

4. Drucker nach Anspruch 3,
wobei die Anzeigesteuereinheit das Abbildungsbild (Im1) veranlasst zu erscheinen, indem das auf der Anzeigeeinheit (22) angezeigte Bild schrittweise zusammengezogen wird und den Rahmen veranlasst, schrittweise um das auf der Anzeigeeinheit (22) angezeigte Druckzielbild in einem Fall zu erscheinen, wo die Anweisung, das Druckzielbild zu drucken, von der Druckanweisungseinheit empfangen wird.

5. Drucker nach einem der Ansprüche 1 bis 4,
wobei die Anzeigesteuereinheit das Abbildungsbild (Im1) in Synchronisation mit einer Auswurfgeschwindigkeit des Mediums bewegt und das Abbildungsbild (Im1) von dem Bildschirm entfernt.

6. Drucker nach einem der Ansprüche 1 bis 5,
wobei die Anzeigesteuereinheit das Abbildungsbild (Im1) derart anzeigt, dass eine Ausrichtung des Abbildungsbilds (Im1) einer Ausrichtung des auf das Medium zu druckenden Druckzielbilds entspricht.

7. Drucker nach einem der Ansprüche 1 bis 6, weiter umfassend:
eine Bestätigungseinheit (24a), die die Anweisung von der Druckanweisungseinheit, das Druckzielbild zu drucken, bestätigt; und
eine Stornierungseinheit (24c5), die die Anweisung von der Druckanweisungseinheit, das Druckzielbild zu drucken, storniert,
wobei die Anzeigesteuereinheit einen Dialog (DL) zur Abfrage zum Drucken auf der Anzeigeeinheit (22) in einem Fall anzeigt, wo die Anweisung das Druckzielbild zu drucken, von der Druckanweisungseinheit empfangen wird.

8. Drucker nach Anspruch 7,
wobei die Anzeigesteuereinheit den Dialog (DL) von einem Rand des Bildschirms in einem Fall anzeigt, wo die Anweisung, das Druckzielbild zu drucken, von der Druckanweisungseinheit empfangen wird.

9. Drucker nach einem der Ansprüche 1 bis 8,
wobei die Druckeinheit (52, 54, 56) das Druckzielbild auf einen Sofortbildfilm druckt.

10. Digitalkamera mit einem Drucker, umfassend:
einen Bildsensor;
eine Bildspeichereinheit;
eine Erfassungsanweisungseinheit, die eine Anweisung zum Erfassen eines Bilds überträgt;
eine Erfassungssteuereinheit, die ein Bild durch den Bildsensor gemäß der Anweisung zum Erfassen des Bilds von der Erfassungsanweisungseinheit erfasst und das erhaltene Bild in der Bildspeichereinheit speichert;
den Drucker nach einem der Ansprüche 1 bis 9; und
eine Betriebsmoduswechseleinheit, die zwischen einem Erfassungsmodus und einem Wiedergabemodus als einem Betriebsmodus wechselt,
wobei die Anzeigesteuereinheit als ein Druckzielbild (Im) ein Bild, das in der Bildspeichereinheit gespeichert ist, auf der Anzeigeeinheit (22) in einem Fall anzeigt, wo der Betriebsmodus auf den Wiedergabemodus eingestellt ist, und ein Abbildungsbild (Im1) des Druckzielbilds derart anzeigt, dass das zu druckende Abbildungsbild (Im1) das Druckzielbild überlagert, das auf der Anzeigeeinheit (22) angezeigt wird, und in einem Fall, wo die Anweisung das Druckzielbild zu drucken von der Druckanweisungseinheit empfangen wird, das Abbildungsbild (Im1) entlang einer Auswurfrichtung des Mediums bewegt, um das Abbildungsbild (Im1) von einem Bildschirm der Anzeigeeinheit (22) zu entfernen, und schrittweise das angezeigte Druckzielbild (Im), das unter dem Abbildungsbild (Im1) versteckt ist, gemeinsam mit der Bewegung des Abbildungsbilds (Im1) anzeigt.

11. Digitalkamera mit einem Drucker nach Anspruch 10, weiter umfassend:
eine Erfassungsmoduswechseleinheit (26), die zwischen einem ersten Erfassungsmodus und einem zweiten Erfassungsmodus als dem Erfassungsmodus wechselt,
wobei in einem Fall, wo der Erfassungsmodus auf den ersten Erfassungsmodus eingestellt ist und ein Bild erfasst wird, die Drucksteuereinheit die Druckeinheit (52, 54, 56) veranlasst, das erfasste Bild zu drucken, und
in einem Fall, wo der Erfassungsmodus auf den zweiten Erfassungsmodus eingestellt ist und Erfassen durchgeführt wird, die Anzeigesteuereinheit als das Druckzielbild (Im) das erfasste Bild auf der Anzeigeeinheit (22) anzeigt und die Drucksteuereinheit die Druckeinheit (52, 54, 56) veranlasst, das erfasste Bild zu drucken und die Anzeigesteuereinheit das Abbildungsbild (Im1) des Druckzielbilds derart anzeigt, dass das zu druckende Abbildungsbild (Im1) das Druckzielbild überlagert, das auf der Anzeigeeinheit (22) angezeigt wird, das Abbildungsbild (Im1) entlang einer Auswurfrichtung des Mediums bewegt und das Abbildungsbild (Im1) von dem Bildschirm in einem Fall entfernt, wo eine Anweisung das Druckzielbild zu drucken, das auf der Anzeigeeinheit (22) angezeigt wird, empfangen wird.

12. Informationsanzeigeverfahren eines Druckers, der eine Anzeigeeinheit (22) beinhaltet, wobei das Verfahren Folgendes umfasst:
einen Schritt zum Anzeigen eines Druckzielbilds (Im) auf der Anzeigeeinheit (22); und
einen Schritt zum Anzeigen eines Abbildungsbilds (Im1) des Druckzielbilds derart, dass das zu druckende Abbildungsbild (Im1) das Druckzielbild überlagert, das auf der Anzeigeeinheit (22) angezeigt wird, und in einem Fall, wo die Anweisung das Druckzielbild zu drucken, empfangen wird, Bewegen des Abbildungsbilds (Im1) entlang einer Auswurfrichtung (f) eines Mediums, auf das das Druckzielbild gedruckt wird, um das Abbildungsbild (Im1) von einem Bildschirm (22) zu entfernen, und schrittweisen Anzeigen des angezeigten Druckzielbilds (Im), das unter dem Abbildungsbild (Im1) versteckt ist, gemeinsam mit der Bewegung des Abbildungsbilds (Im1).

## Revendications

1. Imprimante comprenant :
une unité d'impression (52, 54, 56) qui imprime une image sur un support ;
une unité d'affichage (22) ;
une unité de commande d'affichage qui affiche une image cible d'impression (Im) sur l'unité d'affichage (22) ;
une unité d'instruction d'impression qui transmet une instruction pour imprimer l'image cible d'impression (Im) qui est affichée sur l'unité d'affichage (22) ; et
une unité de commande d'impression qui amène l'unité d'impression (52, 54, 56) à imprimer l'image cible d'impression qui est affichée sur l'unité d'affichage (22) dans un cas où l'instruction pour imprimer l'image cible d'impression est reçue à partir de l'unité d'instruction d'impression,
**caractérisée en ce que** l'unité de commande d'affichage affiche une image d'imagerie (Im1) de l'image cible d'impression de sorte que l'image d'imagerie (Im1) chevauche une image cible d'impression qui est affichée (Im) sur l'unité d'affichage (22), et dans un cas où l'instruction pour imprimer l'image est reçue à partir de l'unité d'instruction d'impression, déplace l'image d'imagerie (Im1) le long d'une direction d'éjection (f) du support, pour retirer l'image d'imagerie (Im1) de l'écran de l'unité d'affichage (22), et affiche progressivement l'image cible d'impression qui est affichée (Im) cachée sous l'image d'imagerie (Im1) en même temps que le déplacement de l'image d'imagerie (Im1).

2. Imprimante selon la revendication 1,
dans laquelle l'unité de commande d'affichage change la luminosité et/ou la saturation de l'image cible d'impression (Im) qui est affichée sur l'unité d'affichage (22) dans un cas où l'instruction pour imprimer l'image est reçue à partir de l'unité d'instruction d'impression.

3. Imprimante selon la revendication 1 ou 2,
dans laquelle l'image d'imagerie (Im1) est une image acquise en ajoutant une bordure à l'image cible d'impression devant être imprimée.

4. Imprimante selon la revendication 3,
dans laquelle l'unité de commande d'affichage amène l'image d'imagerie (Im1) à apparaître en contractant progressivement l'image cible d'impression qui est affichée sur l'unité d'affichage (22) et amène la bordure à apparaître progressivement autour de l'image cible d'impression qui est affichée sur l'unité d'affichage (22) dans un cas où l'instruction pour imprimer l'image cible d'impression est reçue à partir de l'unité d'instruction d'impression.

5. Imprimante selon l'une quelconque des revendications 1 à 4,
dans laquelle l'unité de commande d'affichage déplace l'image d'imagerie (Im1) de manière synchronisée sur une vitesse d'éjection du support, et retire l'image d'imagerie (Im1) de l'écran.

6. Imprimante selon l'une quelconque des revendications 1 à 5,
dans laquelle l'unité de commande d'affichage affiche l'image d'imagerie (Im1) de sorte qu'une orientation de l'image d'imagerie (Im1) corresponde à une orientation de l'image cible d'impression devant être imprimée sur le support.

7. Imprimante selon l'une quelconque des revendications 1 à 6, comprenant en outre :
une unité de confirmation (24a) qui confirme l'instruction pour imprimer l'image cible d'impression provenant de l'unité d'instruction d'impression ; et
une unité d'annulation (24c5) qui annule l'instruction pour imprimer l'image cible d'impression provenant de l'unité d'instruction d'impression,
dans laquelle l'unité de commande d'affichage affiche un dialogue (DL) pour demander l'impression sur l'unité d'affichage (22) dans un cas où l'instruction pour imprimer l'image cible d'impression est reçue à partir de l'unité d'instruction d'impression.

8. Imprimante selon la revendication 7,
dans laquelle l'unité de commande d'affichage affiche le dialogue (DL) à partir d'un bord de l'écran dans un cas où l'instruction pour imprimer l'image cible d'impression est reçue à partir de l'unité d'instruction d'impression.

9. Imprimante selon l'une quelconque des revendications 1 à 8,
dans laquelle l'unité d'impression (52, 54, 56) imprime l'image cible d'impression sur un film à développement instantané.

10. Appareil photo numérique avec une imprimante comprenant :
un capteur d'image ;
une unité de stockage d'image ;
une unité d'instruction de capture qui transmet une instruction pour capturer une image ;
une unité de commande de capture qui capture une image par le capteur d'image conformément à l'instruction pour capturer l'image provenant de l'unité d'instruction de capture, et stocke l'image acquise dans l'unité de stockage d'image ;
l'imprimante selon l'une quelconque des revendications 1 à 9 ; et
une unité de permutation de modes de fonctionnement qui permute un mode de capture et un mode de lecture, en tant que mode de fonctionnement,
dans lequel l'unité de commande d'affichage affiche, en tant qu'image cible d'impression (Im), une image stockée dans l'unité de stockage d'image sur l'unité d'affichage (22) dans un cas où le mode de fonctionnement est réglé sur le mode de lecture, et affiche une image d'imagerie (Im1) de l'image cible d'impression de sorte que l'image d'imagerie (Im1) devant être imprimée chevauche l'image cible d'impression qui est affichée sur l'unité d'affichage (22), et dans un cas où l'instruction pour imprimer l'image cible d'impression est reçue à partir de l'unité d'instruction d'impression, déplace l'image d'imagerie (Im1) le long d'une direction d'éjection du support, pour retirer l'image d'imagerie (Im1) d'un écran de l'unité d'affichage (22) et affiche progressivement l'image cible d'impression qui est affichée (Im) cachée sous l'image d'imagerie (Im1) en même temps que le déplacement de l'image d'imagerie (Im1).

11. Appareil photo numérique avec une imprimante selon la revendication 10, comprenant en outre :
une unité de permutation de modes de capture (26) qui permute un premier mode de capture et un second mode de capture, en tant que mode de capture,
dans lequel, dans un cas où le mode de capture est réglé sur le premier mode de capture et une image est capturée, l'unité de commande d'impression amène l'unité d'impression (52, 54, 56) à imprimer l'image capturée, et
dans un cas où le mode de capture est réglé sur le second mode de capture et une capture est effectuée, l'unité de commande d'affichage affiche, en tant qu'image cible d'impression (Im), l'image capturée sur l'unité d'affichage (22), et l'unité de commande d'impression amène l'unité d'impression (52, 54, 56) à imprimer l'image capturée, et l'unité de commande d'affichage affiche l'image d'imagerie (Im1) de l'image cible d'impression de sorte que l'image d'imagerie (Im1) devant être imprimée chevauche l'image cible d'impression qui est affichée sur l'unité d'affichage (22), déplace l'image d'imagerie (Im1) le long d'une direction d'éjection du support, et retire l'image d'imagerie (Im1) de l'écran dans un cas où une instruction pour imprimer l'image cible d'impression qui est affichée sur l'unité d'affichage (22) est reçue.

12. Procédé d'affichage d'informations d'une imprimante incluant une unité d'affichage (22), le procédé comprenant :
une étape consistant à afficher une image cible d'impression (Im) sur l'unité d'affichage (22) ; et
une étape consistant à afficher une image d'imagerie (Im1) de l'image cible d'impression de sorte que l'image d'imagerie (Im1) devant être imprimée chevauche l'image cible d'impression qui est affichée sur l'unité d'affichage (22), et dans un cas où l'instruction pour imprimer l'image cible d'impression est reçue, déplacer l'image d'imagerie (Im1) le long d'une direction d'éjection (f) d'un support sur lequel l'image cible d'impression est imprimée, pour retirer l'image d'imagerie (Im1) d'un écran de l'unité d'affichage (22) et afficher progressivement l'image cible d'impression qui est affichée (Im) cachée sous l'image d'imagerie (Im1) en même temps que le déplacement de l'image d'imagerie (Im1).
